(19) **Europäisches Patentamt**
**European Patent Office**
**Office européen des brevets**

(11) **EP 4 368 913 B1**

(12) **EUROPEAN PATENT SPECIFICATION**

(45) Date of publication and mention
of the grant of the patent:
**09.04.2025 Bulletin 2025/15**

(21) Application number: **23206241.4**

(22) Date of filing: **26.10.2023**

(51) International Patent Classification (IPC):
*F24S 60/30* (2018.01)  *F24S 40/58* (2018.01)

(52) Cooperative Patent Classification (CPC):
**F24S 60/30; F24S 10/45; F24S 40/58; F24S 50/40;
F24S 80/30; F24S 90/10**

(54) **COMPACT SOLAR SYSTEM**

KOMPAKTES SOLARSYSTEM

SYSTÈME SOLAIRE COMPACT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.11.2022 IT 202200023118**

(43) Date of publication of application:
**15.05.2024 Bulletin 2024/20**

(73) Proprietor: **Cordivari S.r.l.**
**64020 Morro D'Oro (TE) (IT)**

(72) Inventors:
• **DI GIANNATALE, Daniele**
**64020 Morro D'Oro (TE) (IT)**

• **TIBERI, Emidio**
**64020 Morro D'Oro (TE) (IT)**

(74) Representative: **Mulas, Chiara et al**
**Barzanò & Zanardo S.p.A.**
**Via Piemonte, 26**
**00187 Roma (IT)**

(56) References cited:
EP-A1- 0 794 395     EP-A1- 3 282 207
EP-B1- 2 369 261     DE-A1- 102014 207 038
DE-A1- 4 429 838     JP-A- S57 179 534
US-A1- 2010 059 047

**Description**

The present invention concerns a compact solar system.

More precisely, the present invention concerns a compact solar system comprising a hydraulic circuit adapted to activate or deactivate an area of thermal energy storage.

In the state of the art, solar systems for the production of domestic hot water (DHW) are known, which are divided into two macro-families: forced circulation systems and natural circulation systems. The former provide solar collectors (hereinafter also called just collectors) connected, via a hydraulic circuit with circulator, to an insulated energy storage located in a technical room. In the latter, the energy storage element is generally placed near the collector and the energy collected by the collector is transferred on site to the storage, by natural circulation.

The latter systems are in turn divided into systems with the storage separated from the collector and systems with an integrated storage (called in English Integrated Collector Storage or more briefly ICS or compact solar systems), used to reduce the architectural impact, in order to try to limit the size of the solar system as much as possible.

In these systems, solar energy is collected by collecting surfaces (S), covered by highly selective material which transmit part of this energy to an energy storage volume (V) containing a primary heat transfer fluid, for example technical water, or directly a secondary fluid, such as domestic hot water (DHW). De facto, the system receives solar energy in the form of light (electromagnetic) energy and stores part of this energy in the form of thermal energy, increasing the temperature of the fluid stored in the storage tank; generally the outer surface of the storage itself actively participates in the solar energy absorption stage, or in any case the collector and the storage are integrated and are not clearly distinguishable from the outside, all forming a compact system.

The state of the art of ICS systems provides for the division into two families of systems based on the method of control of heat dispersions towards the environment: in the former, heat dispersions are reduced by using a glass cover (for example in patent documents EP 2 746 692 A1, EP 2 924 364 B1), in the latter by using vacuum gaps in order to cancel convective motions. In this latter type of known ICS systems, glass pipes having vacuum gaps are used both as elements collecting solar energy and as elements containing the storage of hot water. In fact, inside them there is the storage or hydraulic tank where the energy absorbed by the selective collecting surface and stored in the glass pipes is transferred. This technique of control of thermal dispersions allows for a high efficiency in the solar energy storage process, since the amount of dissipation towards the environment is reduced to a minimum; in fact, the vacuum gap reduces convective heat exchanges and only involves dissipation by irradiation. Examples of this type of ICS systems are well known in the state of the art, for example in patent documents WO 2019/123508 A1 and WO 2018/055648 A1.

In most of the state-of-the-art ICS compact systems, for safety reasons of the components (such as circulators, gaskets, etc.), and given the technical operating limits of the mixing valve of the downstream sanitary system and for avoiding excessive pressures or generation of steam by lamination at ambient pressure, the upper limit of the temperature of the storage fluid is fixed at approximately 90° - 99°C. Beyond this limit it is necessary to adopt a protection system. Commonly, this protection system consists of dissipating the thermal energy generated, originating from the collection of solar radiations, when the storage temperature reaches its limit values.

Some examples of ICS systems with this safety system, adapted to dissipate the energy stored when the temperature reaches its limit values, are described in the following patent documents:

- WO 2019/123508 A1, wherein it is described a system which in extreme conditions puts the superheated fluid into forced circulation through a circuit obtained on an aluminium frame, suitably finned in such a way as to dissipate heat towards the environment, and
- WO 2018/055648 A1, wherein the overpressure originated from the expansion of the superheated fluid as the temperature increases is used to trigger a thermomechanical kinematic mechanism via a hydraulic piston, which leads to the shielding of the collecting surface, thus avoiding the entry of energy solar into the system, which is reflected, and causing a cooling of the primary superheated fluid.

Generally, in known solar systems, the collection of solar energy takes place in the form of light (electromagnetic) energy converted into thermal energy, increasing the temperature of the fluid stored in the storage and of the system components. In periods of more favourable weather conditions, it is possible that the system reaches overheating conditions due to excessive stored thermal energy, which leads to a possible malfunction of the solar system components and therefore of the system itself. State-of-the-art safety systems are adapted to prevent the reaching of operating extreme temperatures. They have the objective of dissipating the excess energy if a DHW withdrawal is not made on the user side (in fact, during the withdrawal, water at the grid temperature, for example at 15-20°C, is introduced into the system, cooling it accordingly), thus preserving the integrity of the system.

Although these safety systems prevent the system from reaching critical temperature values, they do not allow the excess solar energy incident on the system to be used, as this is dispersed and released into the surrounding environment.

The process of heating a fluid using compact solar systems also depends on the nature and volume of the fluid stored in the system. In particular, for most cases where the working fluid is water, the ratio between the volume of the stored fluid (V) and the collecting surface (S), here indicated as V/S, represents a critical factor for the efficiency of such systems.

In fact, the value of the ratio between storage volume and collection surface, referred to as V/S, must fall within an optimal range, which however can vary based on the conditions of use and weather conditions. In particular, if the V/S value is too high, the solar energy may not be sufficient to heat the system and therefore to guarantee the withdrawal of DHW at the minimum design temperature (typically the system must deliver hot water at a temperature not lower than 40°C - 50°C). On the contrary, if the V/S value is too low, the heating process leads to frequent overtemperature conditions; this is because the collected solar energy corresponds to a low storage volume, therefore, there is a greater risk of increasing the fluid temperature to unacceptable values. Furthermore, due to the extreme variability and unpredictability of solar energy, it is not possible a priori (during the design stage) to choose a V/S fixed value that avoids such critical conditions, especially because an ideal system must have a V/S value that allows the availability of domestic hot water even with limited irradiation windows or in conditions of poor irradiation.

The aim of the present invention is to maximise all the solar energy incident on the system, by reducing the dissipation of the incident energy to a minimum, without compromising the performance of the system throughout the year, under both more unfavourable weather conditions and favourable weather conditions.

Furthermore, an aim of the present invention is to allow the compact solar system to store excess energy, without reaching the maximum operating temperature values.

Another aim of the present invention is to allow a rapid heating of the compact solar system under any condition of irradiation and user profile.

Again, an aim of the present invention is to operate the system, as far as possible, at an average temperature of the stored fluid lower than 75°C, which allows the efficiency of the system itself to be increased (less dispersions towards the environment), to limit the thermal stress of the system components and reduce the limescale formation processes.

An object of the present invention is a compact solar system for heating a first heat transfer fluid; said solar system includes an external frame, inside which the following elements are contained: a main tank for containing a heat transfer fluid; collecting means for collecting the incident solar radiation, which, being in heat exchange with said main tank, make it possible to transfer the collected thermal energy to the heat transfer fluid stored in the main tank; and a first hydraulic circuit for the circulation of the first heat transfer fluid, which includes an inlet portion for the inlet of the first heat transfer fluid and an outlet portion for the outlet of the first heat transfer fluid.

Furthermore, the solar system includes an additional tank inside the frame to contain a heat transfer fluid, thermally isolated from the collecting means, and in that the volumetric ratio between the volume of the additional tank and the volume of the main tank is defined by the following relationship:

$$0.3 \leq \frac{V_4}{V_3} \leq 1.3,$$

where $V_3$ is the volume of the main tank and $V_4$ is the volume of the additional tank.

Furthermore, the first hydraulic circuit provides a first heat exchange portion, in heat exchange with the heat transfer fluid contained in the additional tank, and a second heat exchange portion in heat exchange with the heat transfer fluid contained in the main tank.

The first and second heat exchange portions are in fluid connection with each other via a connecting conduit and a first return conduit.

Furthermore, the compact solar system is characterised in that it provides flow adjusting means, arranged in the first hydraulic circuit, to allow the circulation of the first heat transfer fluid from the second heat exchange portion to the first heat exchange portion through the first return conduit, when a threshold temperature of a heat transfer fluid contained in the main tank is reached.

Possibly according to the invention, the first heat exchange portion of the first hydraulic circuit can be the additional tank. The additional tank can therefore be adapted to contain the first heat transfer fluid, and be in fluid connection with the connecting conduit and with the first return conduit of the first hydraulic circuit and with the inlet portion.

Possibly according to the invention, the second heat exchange portion of the first hydraulic circuit can be the main tank, which can be adapted to contain the first heat transfer fluid and be in fluid connection with the connecting conduit and the first return conduit of the first hydraulic circuit and with the outlet portion.

In particular, according to the invention, the main tank can contain a second heat transfer fluid, not in fluid connection with the first heat transfer fluid.

Alternatively, according to the invention, the solar system can include a second hydraulic circuit for the circulation of the second heat transfer fluid. The second hydraulic circuit can be a closed circuit composed of the main tank and a recirculation conduit. Furthermore, the solar system can include a heat exchanger, wherein the recirculation conduit of the second hydraulic circuit and the second heat exchange portion of the first hydraulic circuit can be arranged, in heat exchange with each other.

Again, according to the invention, the solar system can include a second circulation pump arranged in the second hydraulic circuit, to be able to activate the circulation of said second heat transfer fluid in said second hydraulic circuit. Furthermore, it can include means for detecting the circulation of the first heat transfer fluid, in particular a flow switch, in the first hydraulic circuit. Said detecting means can be in connection with the second circulation pump and the solar system can furthermore be configured to activate/deactivate said second circulation pump on the basis of the values detected by the detecting means.

Preferably according to the invention, the second heat exchange portion of the first hydraulic circuit can be arranged inside the main tank.

In particular, according to the invention, the additional tank can contain a second heat transfer fluid, not in fluid connection with the first heat transfer fluid, wherein the first heat exchange portion of the first hydraulic circuit can be arranged inside the additional tank itself.

Still according to the invention, the flow adjusting means, arranged in the first hydraulic circuit, can be a first circulation pump and a non-return valve, wherein said non-return valve can be arranged on the first return conduit between the two heat exchange portions.

Again, according to the invention, the first circulation pump can be arranged on one of the connecting or return conduits, between said two (first and second) heat exchange portions.

Alternatively, according to the invention, the flow adjusting means can be arranged in the first hydraulic circuit and can be a thermostatic valve or an electrovalve, arranged in the first return conduit, between said two heat exchange portions.

Furthermore, according to the invention, the main tank can include a plurality of main storage ducts in fluid connection with each other.

More particularly according to the invention, the second heat exchange portion can include a plurality of heat exchange conduits, in fluid connection with each other; each of which can be inserted into a respective main storage duct of the main tank.

Furthermore, according to the invention, the collecting means of the solar system can be a plurality of pipes having an outer vacuum gap.

In particular, according to the invention, each main storage duct of the main tank can be inserted into a respective pipe having an outer vacuum gap.

Preferably according to the invention, the additional tank can include at least two additional storage ducts in fluid connection with each other.

In particular, according to the invention, the ratio between the sum of the volumes of the main and additional tanks and the surface of the collecting means is defined by the following relationship:

$$50\,\frac{lit}{m^2} \leq \frac{V_3+V_4}{S} \leq 130\,\frac{lit}{m^2},$$

where $V_{3+}V_4$ represents the sum of the volumes of the main and additional tanks while S represents the surface of the collecting means.

Further according to the invention, the solar system can include a control unit connected to the flow adjusting means arranged in the first hydraulic circuit. The control unit can be configured to act on the flow adjusting means on the basis of the temperature of the heat transfer fluid contained in the main tank, when said threshold temperature is reached.

In particular, the threshold temperature can be defined by the following formula:

$$T_s = T_{user} + \frac{V_4}{V_3} * \left(T_{user} - T_{grid}\right)$$

wherein $T_{user}$ is equal to the temperature of the first heat transfer fluid coming out from the outlet portion,
wherein $T_{grid}$ is equal to the temperature of the first heat transfer fluid coming in from the inlet portion, and
wherein $V_3$ and $V_4$ are the main and additional tank volumes, respectively.

Preferably according to the invention, the solar system can include temperature detecting means, arranged in said main tank, for detecting the temperature of the heat transfer fluid contained therein.

Furthermore, according to the invention, the flow adjusting means can include a thermal switch, for detecting the temperature of the heat transfer fluid contained in the main tank, and a first circulation pump electrically connected to said thermal switch. Furthermore, said first circulation pump can be arranged in the first hydraulic circuit and the thermal switch can be arranged in the main tank, in direct or indirect contact with the heat transfer fluid contained therein.

More specifically, according to the invention, the temperature detecting means or the thermal switch can be inserted into a possible thermowell.

Finally, according to the invention, the solar system can be adapted to assume a first use configuration, wherein the first heat transfer fluid can be adapted to flow into said first hydraulic circuit from the inlet portion to the outlet portion, passing through the first and the second heat exchange portion passing only through the connecting conduit. Furthermore, the solar system can assume a second use configuration, wherein the first heat transfer fluid can circulate in the first hydraulic circuit between the first and second heat exchange areas, passing through both the connecting conduit and the first return conduit. Furthermore, during use, the solar system can assume said second use configuration when the temperature of the heat transfer fluid contained in the main tank exceeds said threshold temperature.

The invention will now be described for illustrative but non-limiting purposes, with particular reference to the drawings of the attached figures, wherein:

Figure 1a shows a perspective view of the solar system according to the invention, in a first embodiment;
Figure 1b shows a perspective cutaway view of the solar system of Figure 1a;
Figure 1c shows an exploded perspective view of the solar system of Figure 1a;
Figure 1d shows a top view of some components of the solar system of Figure 1c;
Figure 2 shows a top view of some components of a solar system according to the invention, in a second embodiment;
Figure 3a shows a schematic view of the hydraulic circuit of the solar system of Figure 1a;
Figure 3b shows a schematic view of the hydraulic circuit of the solar system of Figure 2;
Figure 4a shows a schematic view of the hydraulic circuit of Figure 3a, in a first use configuration during the withdrawal of the heated secondary fluid;
Figure 4b shows a schematic view of the hydraulic circuit of Figure 3b, in a first use configuration during the withdrawal of the heated secondary fluid;
Figure 5a shows a schematic view of the hydraulic circuit of Figure 3a, during the second use configuration wherein the energy transfer takes place between the main tank and the additional tank;
Figure 5b shows a schematic view of the hydraulic circuit of Figure 3b, during the second use configuration wherein the energy transfer takes place between the main tank and the additional tank;
Figure 6 shows a schematic view of the hydraulic circuit of the solar system according to the invention in a third embodiment;
Figure 7 shows a schematic view of the hydraulic circuit of the solar system according to the invention in a fourth embodiment;
Figure 8 shows a schematic view of the hydraulic circuits of the solar system according to the invention in a fifth embodiment;
Figure 9 shows a schematic view of the hydraulic circuits of the solar system according to the invention in a sixth embodiment;
Figure 10 shows a schematic view of the hydraulic circuits of the solar system according to the invention in a seventh embodiment;
Figure 11a shows a schematic view of the solar system of Figure 3a associated with a first control system;
Figure 11b shows a schematic view of the solar system of Figure 3a associated with a second control system;
Figure 11c shows a schematic view of the solar system of Figure 3a associated with a third control system;
Figure 12 shows a sectional view along the XII-XII' section plane of the solar system of Figure 11a;
Figure 13 shows the flow diagram of the operating logic of the hydraulic circuit of the solar system according to the invention;
Figure 14 shows a graph representing the variation in threshold temperature as the ratio between the volume of the additional tank and the volume of the main tank of the solar system according to the invention varies, and as the water grid temperature varies;
Figure 15 shows a graph representing the variation of the threshold temperature of the solar system according to the invention as the temperature of the water grid varies for different values of the ratio between the volume of the additional tank and the volume of the main tank; and
Figure 16 shows a graph representing the variation of the threshold temperature as the ratio between the volume of the additional tank and the volume of the main tank of the solar system according to the invention varies, for different values of the water grid temperature.

As previously mentioned, the process of heating a fluid by compact solar systems depends on the ratio between the volume of the stored fluid (V) and the collecting surface (S).

The importance of the V/S ratio can be better understood with a numerical example, wherein the energy transferred to the volume of stored fluid can be expressed in the form:

$$G * S * \eta = V * \rho * c * \Delta T$$

Where:

G [J/m$^2$] indicates the amount of incident solar energy per surface unit,
S [m$^2$] represents the collecting surface of the compact solar system,
$\eta$ is the solar energy collection efficiency of the solar system,
V [m$^3$] is the stored fluid volume,
$\rho$ [kg/m$^3$] indicates the stored fluid density,
c [J/kg*K] represents the specific heat of the stored fluid, and
$\Delta T$ [K] is the temperature difference of the stored fluid between the beginning and the end of the heating process of such fluid.

After a simple mathematical step, it can be noted that, by increasing the solar energy G, with the same V/S ratio, the value of $\Delta T$ and therefore the temperature difference of the stored fluid will increase.

$$G * \eta = V/S * \Delta T * \rho * c$$

If, however, an increase in G also corresponds to an increase in V/S, it can be seen from the equation that the $\Delta T$ value will increase less than in the previous case.

Below are some numerical examples having the aim of calculating the actual $\Delta T$ values, using specific fixed G, V/S, $\eta$ values of a solar system adapted to simulate true environmental and use conditions (grid temperature 15°C and minimum final DHW outlet temperature in the range 40°C - 50°C).

"Blue sky" winter day (in Italian "cielo blu", name for a day of favourable solar irradiation):

$$G = 17 \text{ MJ/m}^2$$

$$V/S = 40 \text{ l/m}^2$$

$$\eta = 0.6$$

$$\Delta T = 61°C \text{ (final temperature 76°C)}$$

"Blue sky" summer day:

$$G = 27 \text{ MJ/m}^2$$

$$V/S = 40 \text{ l/m}^2$$

$$\eta = 0.6$$

$$\Delta T = 97°C \text{ (final temperature 112°C)}$$

Therefore, in summer the system in a single day of solar energy storage can be in overtemperature conditions.

If, however, in summer a solar system having a higher V/S value equal to, for example, 60 l/m$^2$ is taken into consideration,

"Blue sky" summer day:

$$G = 27 \text{ MJ/m}^2$$

$$V/S = 60 \text{ l/m}^2$$

$$\eta = 0.6$$

$$\Delta T = 65°C \text{ (final temperature 80°C)}$$

In this case, reaching overtemperature conditions is avoided and at the same time all the daily solar energy is stored.

Imagining adopting only the same solar system of V/S value = 60 l/m$^2$, we are considering a day with little irradiance, technically known as "grey sky day" (in Italian "giornata di cielo grigio"). The solar energy values can also be halved, so the calculation becomes:

"Grey sky" winter day:

$$G\_inv = 8 \text{ MJ/m}^2$$

$$V/S = 60 \text{ l/m}^2$$

$$\eta = 0.6$$

$$\Delta T = 19°C \text{ (final temperature 34°C)}$$

That is, the design DHW temperature conditions are not reached.

Instead, if a solar system with a V/S value = 40 l/m$^2$ is adopted again, we obtain:

Grey sky winter day

$$G\_inv = 8 \text{ MJ/m}^2$$

$$V/S = 40 \text{ l/m}^2$$

$$\eta = 0.6$$

$$\Delta T = 29°C \text{ (final temperature 44°C)}$$

Therefore, in this case a temperature is reached that falls within the design range of 40 - 50°.

Moreover, if a secondary circuit for heating a secondary fluid by heat exchange with a primary fluid (for example by a heat exchanger) is used, it is important that the solar system has a more conservative V/S value, because it is necessary to bring the primary storage to high temperature to allow an optimal primary/secondary exchange. In other words, having a primary fluid at 45 - 50°C is not sufficient to guarantee a heat exchange with the secondary circuit such as to bring it to design DHW conditions of 40°C - 50°C, unless using a heat exchanger having a high exchange surface, which would make the objective of creating a compact system difficult and would also be anti-economic.

In the context of systems wherein there is a constant transfer of energy from the collection area to the storage area, the solar system according to the present invention provides the possibility of having a dynamic V/S ratio value over time, therefore variable depending on weather conditions.

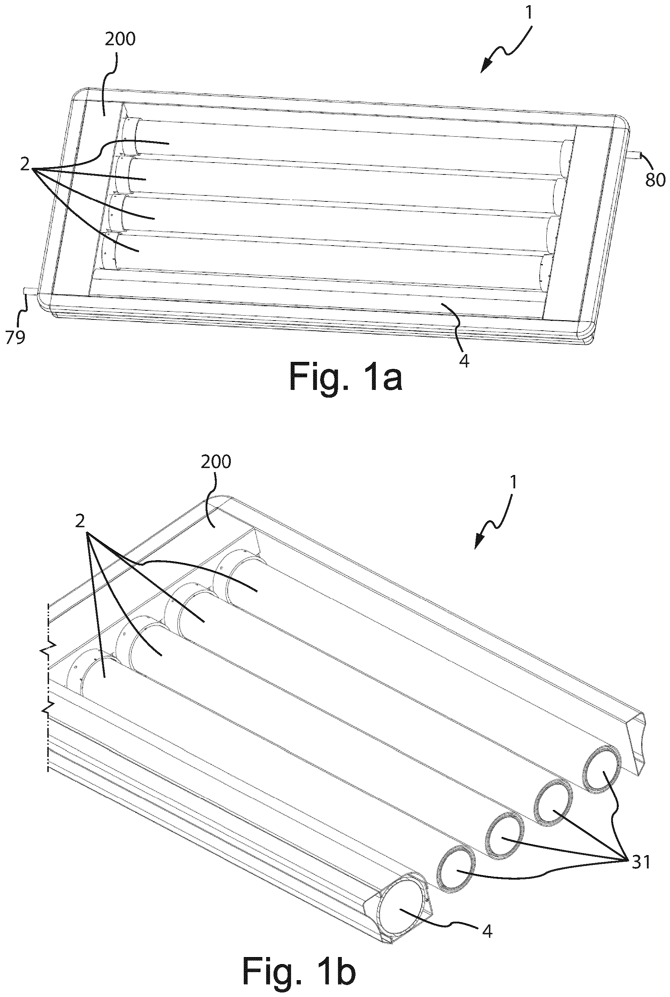

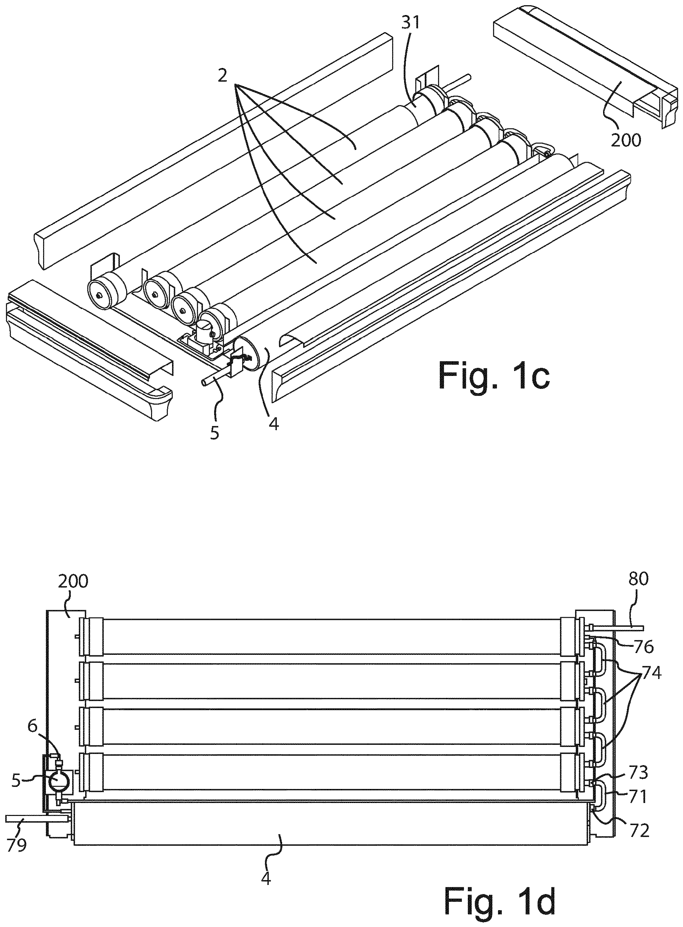

In Figures 1a - 1d and 3a, 4a and 5a a solar system according to the invention is shown, in a first embodiment, indicated with the numerical reference 1.

The solar system 1 according to the invention is of the compact type, as previously described, and is adapted to heat a first heat transfer fluid, in particular a secondary fluid, for example domestic hot water (DHW). The solar system 1 includes an external frame 200, inside which the following elements are contained, described herein below.

A main tank 3 necessary to contain a heat transfer fluid, collecting means 2 for collecting the solar radiation incident on them, a first hydraulic circuit 7 for the circulation of the first heat transfer fluid, and an additional tank 4 for containing a heat transfer fluid.

In the present embodiment, the main tank 3 and the additional tank 4 are adapted to contain the same heat transfer fluid, in particular said first heat transfer fluid. In other embodiments, as will be seen below, a second heat transfer fluid can be provided, possibly contained in one of the two tanks.

The collecting means 2 are in heat exchange with the main tank 3 in order to transfer the collected thermal energy to the heat transfer fluid contained in the main tank 3. The first hydraulic circuit 7 in turn includes an inlet portion 79 for the inlet of the first incoming heat transfer fluid and an outlet portion 80 for the outlet of the first outgoing heat transfer fluid on the user side.

Furthermore, the additional tank 4 is thermally insulated from the collecting means 2. The main tank 3 and the additional tank 4 are such that the volumetric ratio between their respective volumes $V_3$ and $V_4$ is defined by the following relationship:

$$0.3 \leq \frac{V_4}{V_3} \leq 1.3.$$

Moreover, the first hydraulic circuit 7 provides a first heat exchange portion 4, which is in heat exchange with the heat transfer fluid contained in said additional tank 4, and a second heat exchange portion 3, which instead is in heat exchange with the heat transfer fluid contained in the main tank 3. Said first 4, 94' and second 3, 94 heat exchange portions are in fluid connection with each other via a connecting conduit 71 and a first return conduit 75. In the specific embodiment, the two heat exchange portions coincide respectively with the additional tank 4 and the main tank 3, as both are adapted to contain the same first heat transfer fluid which, by circulating and mixing between the two tanks at different temperatures, act as heat exchange areas.

The compact solar system 1 according to the invention also provides flow adjusting means 5, 6 arranged in the first hydraulic circuit 7, used in order to allow the circulation of the first heat transfer fluid from the second heat exchange portion 3 to the first heat exchange portion 4 through said first return conduit 75, when a threshold temperature $T_s$ of a heat transfer fluid contained in said main tank 3 is reached.

Preferably, said solar system 1 can be adapted to assume a first use configuration wherein the first heat transfer fluid is adapted to flow into said first hydraulic circuit 7 from said inlet portion 79 to said outlet portion 80 through said first 4 and second 3 heat exchange portions passing only through said connecting conduit 71, and a second use configuration wherein the first heat transfer fluid circulates into said first hydraulic circuit 7 between said first 4 and second 3 heat exchange areas passing through both said connecting conduit 71 and first return conduit 75. Again, during use, said solar system 1 assumes said second use configuration when the temperature $T_3$ of the heat transfer fluid contained in the main tank 3 exceeds said threshold temperature $T_s$.

In the embodiments described herein the collecting means are a plurality of vacuum collecting pipes 2 having an outer gap. In other embodiments, the collecting means can be of a different type, for example the main tank 3 can be directly painted with a highly selective material and protected by a non-vacuum glass cover, or the collecting means can be absorbers consisting of a sheet of metallic material coated by a highly selective material, which is placed in heat exchange with the main tank 3.

Furthermore, in the present embodiment the main tank 3 includes a plurality of main storage ducts 31, in fluid connection with each other, for the storage of the secondary fluid to be heated.

Again, in the present embodiment, a corresponding main storage duct 31 is preferably arranged inside each collecting vacuum pipe 2 with an outer gap. Said plurality of main storage ducts 31 are in fluid connection with each other, via a plurality of further connecting conduits 74, to form the main tank 3.

Furthermore, in the present embodiment the additional tank 4, which is in fluid connection with said main tank 3, is arranged adjacent thereto, preferably in the lower portion of the solar system 1.

Said additional tank 4 can include one or more additional storage ducts in fluid connection with each other or a single duct, as shown for the first embodiment. Said additional tank 4 is shielded from solar radiation by a suitable opaque surface (which can also be the frame 200 of the system 1 itself) and is suitably insulated to reduce heat dissipation towards the environment external to the tank 4 itself. Said additional tank 4 is separated from the main tank 3 and the separation space is suitably insulated.

The additional tank 4 can be arranged in the upper part of the solar system 1, in the lower part of the solar system 1 or in any central area of the solar system 1, both in a horizontal position and in a vertical position if it is elongated in shape.

Furthermore, the additional tank 4 can have a cylindrical shape but also any shape that ensures a structural resistance to the hydraulic pressure of the contained fluid.

Furthermore, the material of the additional tank 4 can be stainless steel but also any material that is compatible with the temperatures and intended use of the contained fluid.

In the present embodiment, the first hydraulic circuit 7 includes said additional tank 4, said plurality of main storage ducts 31 and said plurality of further connecting conduits 74. Furthermore, said first hydraulic circuit 7 provides a connecting conduit 71 for the fluid connection of the additional tank 4, in correspondence with an additional outlet portion 72 of said additional tank 4, with said main tank 3, in particular with at least one duct of said plurality of main storage ducts 31, in correspondence with a main inlet portion 73 of said main tank 3, in particular of a duct of said plurality of main storage ducts 31.

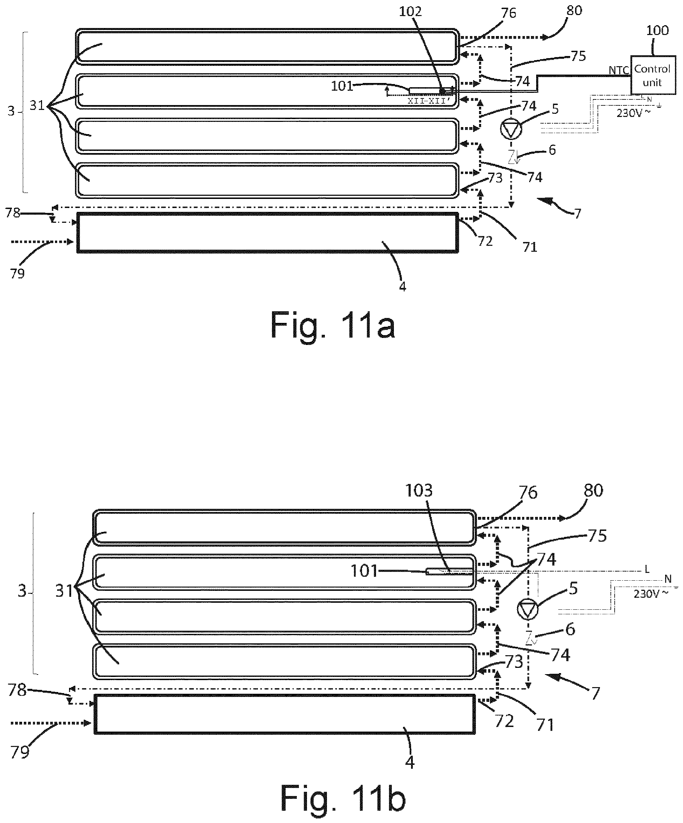

Furthermore, said first hydraulic circuit 7 includes a first return conduit 75 for the fluid connection of the main tank 3, in correspondence with its main outlet portion 76, with the additional inlet portion 78 of said additional tank 4. Preferably, in the described embodiment, in correspondence with said first return conduit 75 there is arranged a first circulation pump 5 adapted to move the first heat transfer fluid from said main tank 3 to said additional tank 4. Said first circulation pump 5 can be connected to a control unit (as shown for the first control system in Figure 11a). Alternatively, a different control system can be provided wherein the first circulation pump 5 is connected to a thermal switch which activates it depending on the temperature value detected by the switch itself (as shown in Figure 11b).

Furthermore, said first return conduit 75 in turn comprises a non-return valve 6, arranged between said two heat exchange portions 3 and 4, in particular it is arranged between said main outlet portion 76 of the main tank 3 and said additional inlet portion 78 of the additional tank 4.

During use, when the first heat transfer fluid is withdrawn from the outlet portion 80, the first heat transfer fluid is simultaneously introduced through the inlet portion 79 at the same flow rate.

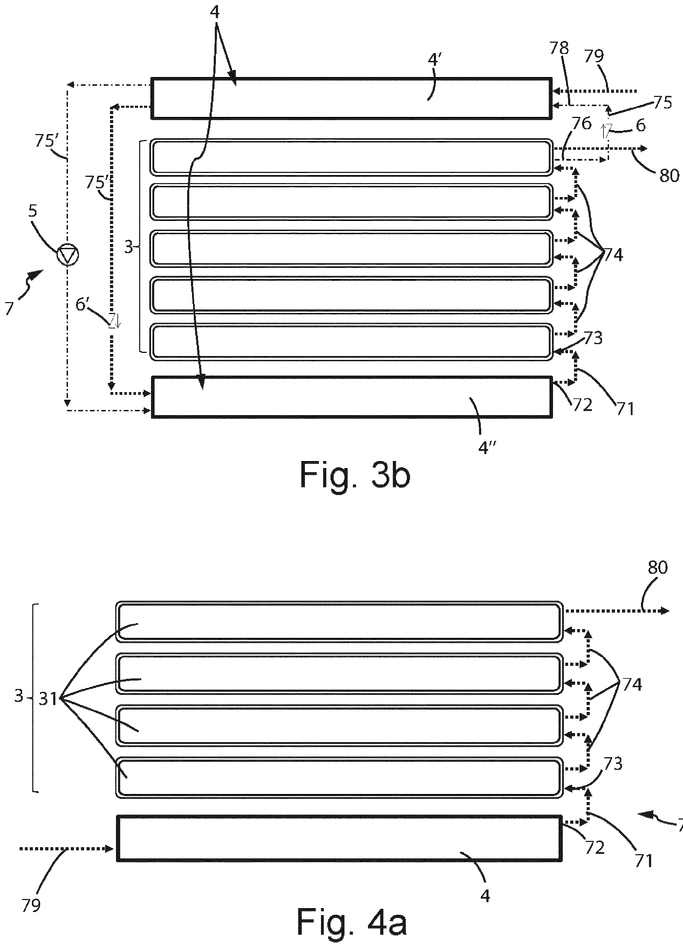

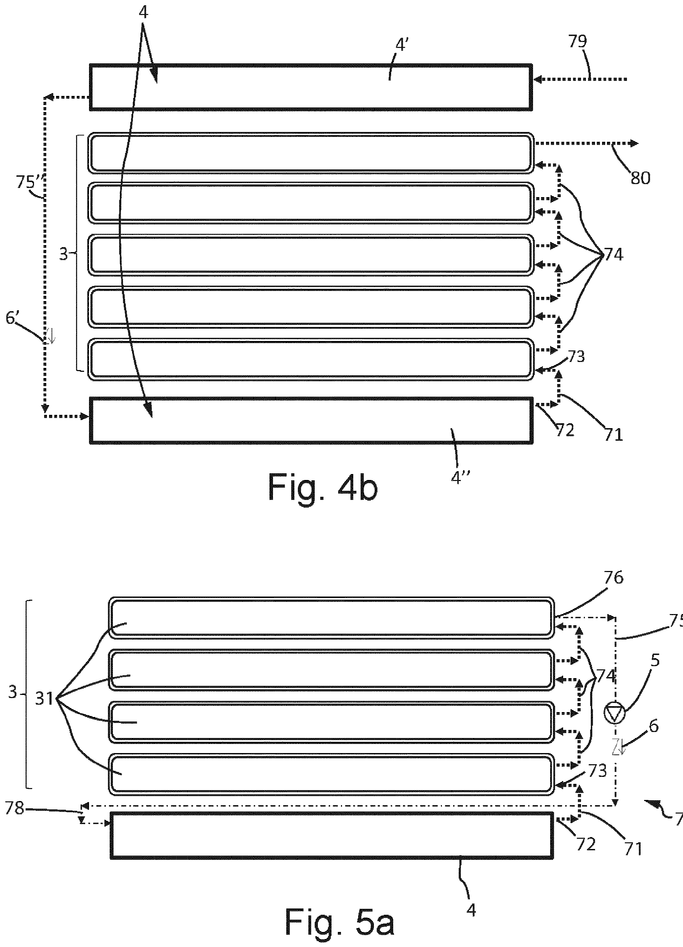

According to the invention in a first use configuration (shown in Figure 4a), as long as it is not necessary to transfer the stored solar energy from the main tank 3 to the additional tank 4, the latter will not participate in the process of storing the incident solar energy. In other words, the first heat transfer fluid flows into the first hydraulic circuit 7 from the inlet portion 79 to the outlet portion 80 without passing through the first return conduit 75 between the main storage 3 and the additional one 4 (which in Figure 4a has not been shown as it is not operational, like the first circulation pump 5), therefore the energy present in the main tank 3 is transferred only to the user downstream of the outlet portion 80. In this condition, the solar energy, transferred to the heated fluid, is stored only in the main tank 3 exposed to solar radiation. In this condition, the additional tank 4 acts solely as an inlet passage conduit for the first heat transfer fluid coming from the hydraulic grid.

Again, according to the invention, the solar system 1 is able to assume a second use configuration (shown in Figure 5a), if temperature conditions are reached such that said solar system 1 risks overheating. Thanks to the additional tank 4 and said first dedicated hydraulic circuit 7, in particular thanks to the first return conduit 75, it is possible to also make the additional tank 4 participate in the storage of solar energy and therefore to increase or decrease the value of the V/S ratio of the solar system 1 according to the invention on the basis of the weather conditions, since the collected solar energy can be redistributed not only in the volume $V_3$ of the main tank 3, but also in the volume $V_4$ of the additional tank 4.

When the extreme conditions of use are reached, i.e. when a threshold temperature $T_s$ of the fluid placed inside the main tank 3 is reached, the fluid connection between the main tank 3 and the additional tank 4 is activated also via the first return conduit 75 of said first hydraulic circuit 7, (as shown in Figure 5a) by activation of flow management means 5, for example said first circulation pump 5, which were deactivated in said first use configuration. By activating the first circulation pump 5, the first heat transfer fluid flows between said additional inlet portion 78 of said additional tank 4 and said main outlet portion 76 of said main tank 3, passing through said first return conduit 75. This therefore allows the energy transfer between the volumes $V_3$ and $V_4$ of said tanks 3 and 4. In other words, the first hydraulic circuit 7 becomes a closed circuit wherein the first heat transfer fluid by passing through the first return conduit 75, which acts as a recirculation conduit, allows the circulation of the first heat transfer fluid between the two tanks 3 and 4, thus also heating the first heat transfer fluid contained in the additional tank 4.

This transfer can take place via passive control, for example by opening and closing of electromechanical elements, or active control, for example via electronics and control logic.

It may also happen that, during the energy transfer, the user needs DHW, therefore grid water is introduced through the inlet portion 79 and hot water is delivered through the outlet portion 80. This can also occur in conjunction with the activation of the first circulation pump 5 and therefore in conjunction with the energy transfer, without compromising the transfer itself or the quality of the DHW delivered on the user side.

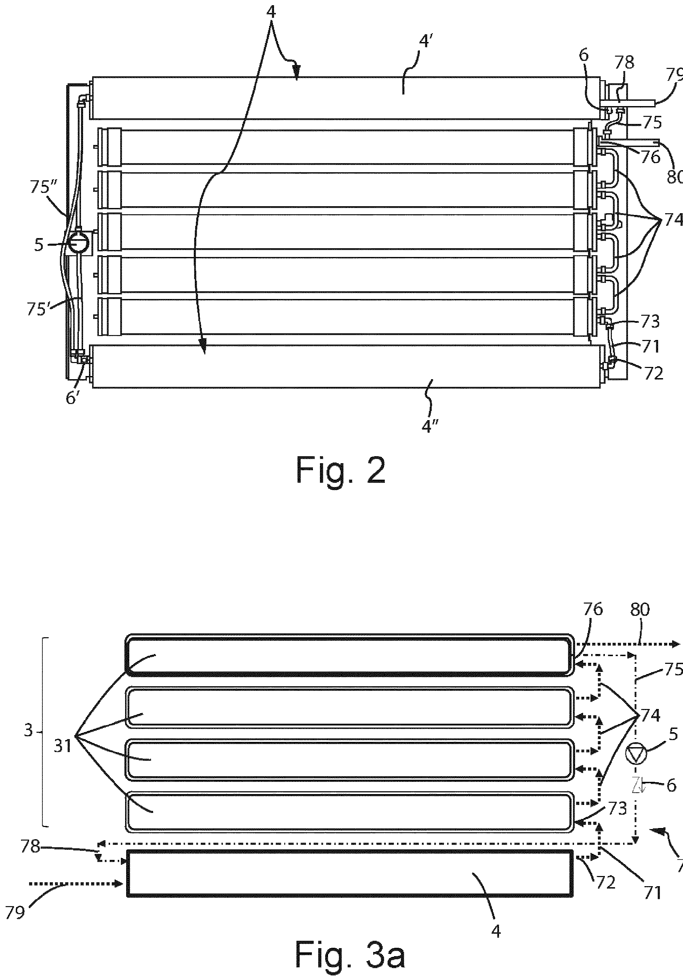

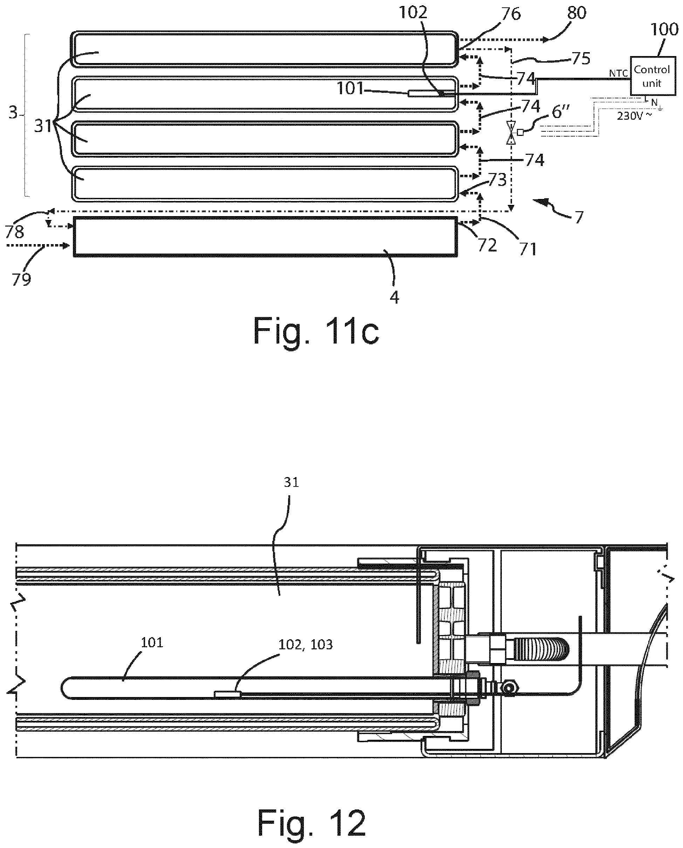

Figures 11a, 11b and 11c show three variants of the embodiment of Figure 3a associated with alternative control systems for describing some principles of activation of the circulation conduits in the recirculation branches, in particular in the first return conduit 75, arranged for transferring energy between the main tank 3 and the additional tank 4.

In particular, Figure 11a shows a schematic showing a first control system for controlling the first circulation pump 5 via a control unit or control panel 100. The control unit 100 has means for detecting the temperature 102, in particular a temperature sensor 102, which detect the value of the temperature $T_3$ of the fluid contained in the main tank 3, in particular in one of the ducts of said plurality of main storage ducts 31, which is compared with the value of the threshold temperature $T_s$. The comparison can be made via threshold/hysteresis logic or via more complex logics, such as PID, PD, PI. The temperature sensor 102 can be either in direct or indirect contact with the fluid contained in the main tank 3 or more simply in indirect contact with this fluid, for example by placing it in a thermowell 101 (as shown in Figure 12) or in contact with the material of which the ducts of said plurality of main storage ducts 31 are made. Therefore, the control unit 100 decides whether to activate the second use configuration, by electrically powering the first circulation pump 5 or not. The first circulation pump 5 therefore guarantees the hydraulic head useful for circulating the fluid (by putting the fluid under pressure) through the non-return valve 6 and overcoming pressure losses throughout the recirculation circuit.

In Figure 11b, alternatively to the control unit of Figure 11a, there is a second control system comprising a thermal switch 103 which detects the temperature $T_3$ of the fluid contained in the main tank 3 or more simply in indirect contact with this fluid, for example by placing it in a thermowell 101, in particular in the plurality of main storage ducts 31, and on the basis of this value the thermal switch 103 closes or not the electrical power circuit of the first circulation pump 5. The thermal switch 103 is preferably arranged in indirect contact with the fluid contained in the plurality of main storage ducts 31, for example by inserting it into a thermowell 101 (as shown in Figure 12) or in contact with the material of which the ducts of said plurality of main storage ducts 31 are made.

Furthermore, Figure 11c shows an alternative schematic of the system including a third control system, wherein in the first return conduit 75 there is an electrovalve 6". The latter, if de-powered, is able to stop the circulation of the heat transfer fluid inside said first return conduit 75, while, when powered, the electrovalve 6" allows the passage of fluid. Therefore, similarly to the control of the first circulation pump 5 of the solution of Figure 11a, the control unit 100 can electrically power or not power the electrovalve 6" and allow the transfer of energy between the main tank 3 and the additional tank 4 by means of a natural circulation motion of the fluid.

The described solutions have no limitations on the methods of controlling the energy transfer between the main tank 3 and the additional tank 4, any alternative solutions that have the same functional purpose are considered to be equivalent.

In cases where there is the active control, the threshold temperature $T_s$ can be set by the installer or the customer by means of the electronic device supplied with the system, i.e. a control device that allows the adjustment of the system operating parameters and the principle of operation of the additional tank 4. In any case, a set of recommended default values can be indicated by the manufacturer.

In cases where there is the passive control, components are chosen that intervene at a specific threshold temperature $T_s$.

Preferably the threshold temperature $T_s$ is between 50°C and 85°C.

In further embodiments, the volume of the additional tank can be composed of a plurality of storage ducts that can be activated in cascade, for example the transfer to a first additional tank can be activated when the threshold temperature $T_s$ in the main tank is reached, in turn the transfer to a second additional tank can be activated once the threshold temperature has been reached in the first additional storage and so on. Of course, the choice of the number of additional storage ducts depends on the balance between benefits and costs.

Figures 2, 3b, 4b and 5b show a second embodiment of the solar system 1 according to the invention comprising two additional storage ducts 4', 4" which form said additional tank 4.

This makes it possible to obtain a dimensional compactness. In this case, the first circulation pump 5 can be arranged in a second return conduit 75' which connects the two additional ducts 4' and 4". In this embodiment, the first hydraulic circuit 7 can have a third return conduit 75", wherein a non-return valve 6' is arranged. This third return conduit 75" also connects the at least two additional storage ducts 4' and 4". The function of this third return conduit 75" is to reduce the pressure losses and not force the incoming heat transfer fluid to pass only through the first circulation pump 5 which, for functional reasons, offers a high impediment to the fluid if it is not active.

The first circulation pump 5 allows the withdrawal of the first heated heat transfer fluid, for example hot water, from the main tank 3 through the first return conduit 75 which connects the main outlet conduit 76 of the main tank 3 and the additional inlet portion 78 of the second additional storage duct 4". In turn, the energy is transferred from the second additional storage duct 4" to the first additional storage duct 4' through the second return conduit 75'. The hydraulic recirculation circuit closes via the connecting conduit 71 between the additional outlet portion 72 of the first additional storage duct 4' and the main inlet portion 73 of the main tank 3.

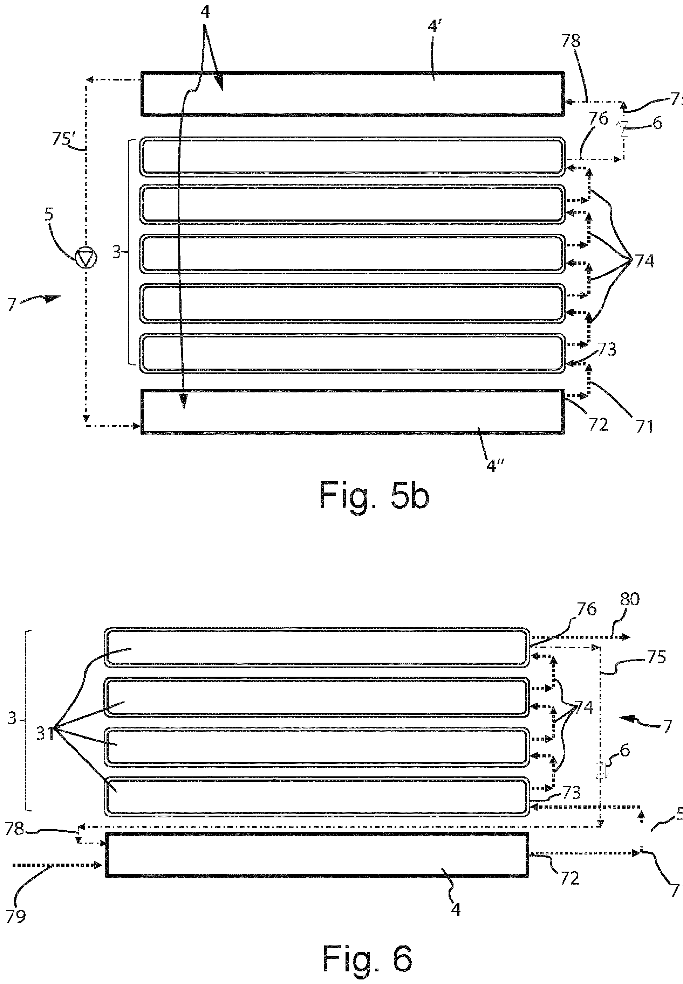

The non-return valves 6 and 6' prevent hydraulic short circuits and guarantee the anti-clockwise recirculation flow, as shown in Figure 5b.

Returning, therefore, to the operation of the solar system 1 according to the invention, once the energy transfer between the main tank 3 and the additional tank 4 has taken place (for example as shown in Figure 5a), the energy of the main tank 3 is redistributed. Then, according to the thermodynamic equilibrium equations, the system approaches the theoretical condition, wherein the final temperature $T''_3$ of the main tank 3 is equal to the final temperature $T''_4$ of the additional tank 4:

$$T''_3 = T''_4 = \frac{(T'_3 * V_3) + (T'_4 * V_4)}{V_3 + V_4}$$

Where $T'_4$ and $T'_3$ are equal to the initial temperatures of the volumes $V_3$ and $V_4$ of the two tanks 4 and 3 before the heat exchange with each other.

This redistribution leads to a decrease in the temperature of the fluid contained in the main tank 3. In fact, since the additional tank 4 is shielded from solar radiation, the fluid contained therein is certainly at an initial temperature $T'_4$ lower than the initial temperature $T'_3$ of the fluid contained in the main tank 3. Therefore, the fluid contained in the main tank 3, once cooled, can continue to absorb solar energy, in correspondence with the collection area, without facing extreme conditions of use, in other words without overheating. At this point, when the first heat transfer fluid is withdrawn on the user side, it will be possible to benefit directly from the energy transferred to the additional tank 4 since the inlet of fluid to the system takes place at the inlet portion 79. In this way, advantageously, the system will operate at a lower average temperature, increasing its efficiency and decreasing its dissipation towards the external environment.

The initial temperature $T'_4$ of the fluid contained in the additional tank 4 affects the final equilibrium temperature T" of the fluid contained in the solar system 1 during the energy transfer between the main tank 3 and the additional tank 4: the higher the initial temperature $T'_4$ of the fluid contained in the additional tank 4, the higher the final equilibrium temperature T". Therefore, with the repetition of storage processes, a point will be reached at which said transfer will no longer be beneficial. Therefore, when this condition is reached, the main tank 3 will continue to increase its temperature regardless of whether the recirculation circuit is activated and will potentially be able to reach the critical conditions of use (this is possible in conditions of high irradiation and particularly high external temperatures). The solar system 1 can therefore include a dissipator element, for example like those described in the state of the art, in order to avoid reaching this extreme condition of extraordinary use or a protection element with a safety valve that discharges hot fluid from the system automatically reintroducing cold fluid from the water grid.

The solar system 1 is preferably designed in such a way that, in the event that the user withdraws the first heat transfer fluid every 48/72 hours, this extreme condition of extraordinary use is not likely.

To support this observation, the value of the volume $V_4$ of the additional tank 4 can therefore be indicated in relationship to the volume $V_3$ of the main tank 3 via the following relationships. As anticipated, the ratio between the volume $V_4$ of the additional tank 4 and the volume $V_3$ of the main tank 3 is included in the following range of values:

$$0.3 \le \frac{V_4}{V_3} \le 1.3$$

Furthermore, the ratio between the total volume of solar system 1, $V_3 + V_4$, and the collecting surface S, defined as per the UNI EN ISO 9488 standard which defines the geometric references to be used for calculating the collecting surface, can be included in the following range of values:

$$50 \frac{lit}{m^2} \le \frac{V_3 + V_4}{S} \le 130 \frac{lit}{m^2}$$

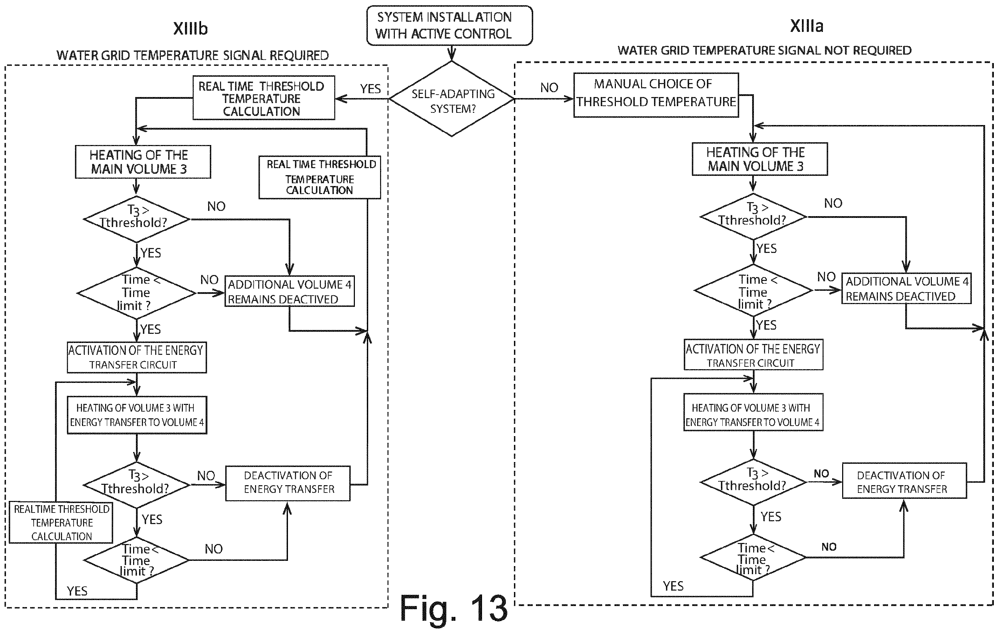

Furthermore, the invention concerns a specific control strategy/algorithm for the activation or not of the circuitry of said volume $V_4$ of the additional tank 4. Figure 13 shows the flow diagram of the control strategy for the switch of the solar system 1 according to the invention between the first and second use configuration, possibly also based on time windows within which allowing the system to execute the energy transfer logic.

The diagram shows a first option indicated with the reference XIIIa wherein the threshold temperature $T_s$ is entered by the user or installer during the installation stage. In this configuration, in the event that the temperature $T_3$ of the fluid in the main tank 3 is greater than a threshold temperature $T_s$ and the time of reaching this condition is within the time range allowed by the user or installer during the installation stage, the system switches to the second use configuration, i.e. the energy transfer between the main tank 3 and the additional tank 4 is activated. Otherwise, the volume of the additional tank 4 does not store heated fluid and is not involved in the thermal process of the solar system 1. The hourly intervals selectable by the user or installer can respond to different needs, for example it is not recommended to keep the energy transfer function active close to sunset time, since it could happen that the final temperatures $T''_3$ and $T''_4$ of the fluid in tanks 3 and 4 are such that an optimal value for the DHW production cannot be guaranteed the following morning, due to the night-time cooling. After a stage of heating of the volume of fluid contained in the main tank 3 and transferring of energy to the fluid contained in the volume of the additional tank 4, if the temperature $T_3$ of the fluid contained in the main tank 3 is lower than said threshold temperature $T_s$ then the system returns to the first use configuration, i.e. the hydraulic recirculation flow is stopped.

In the event that the temperature $T_3$ of the fluid contained in the main tank 3 is greater than said threshold temperature $T_s$, it is further checked whether the system is operating within a time limit or not, respectively keeping the system for transferring energy to the additional tank volume 4 active or not.

The flow diagram of Figure 13 further shows a second option indicated with the reference XIIIb with the same options and logic as the first option XIIIa, but with the difference that the threshold temperature $T_s$ is adjusted in real time, as better explained herein below.

The temperature $T_3$ of the fluid contained in the main tank 3 adapted to carry out the energy transfer is linked to the inlet temperature $T_{grid}$ of the secondary fluid (grid temperature) via said inlet portion 79 and also by the ratio between the volumes $V_4/V_3$ of the main tank 3 and additional tank 4 of solar system 1, according to the following relationship:

$$(V_3 * T_s) + (V_4 * T_{grid}) = (V_3 + V_4) * T_{user}$$

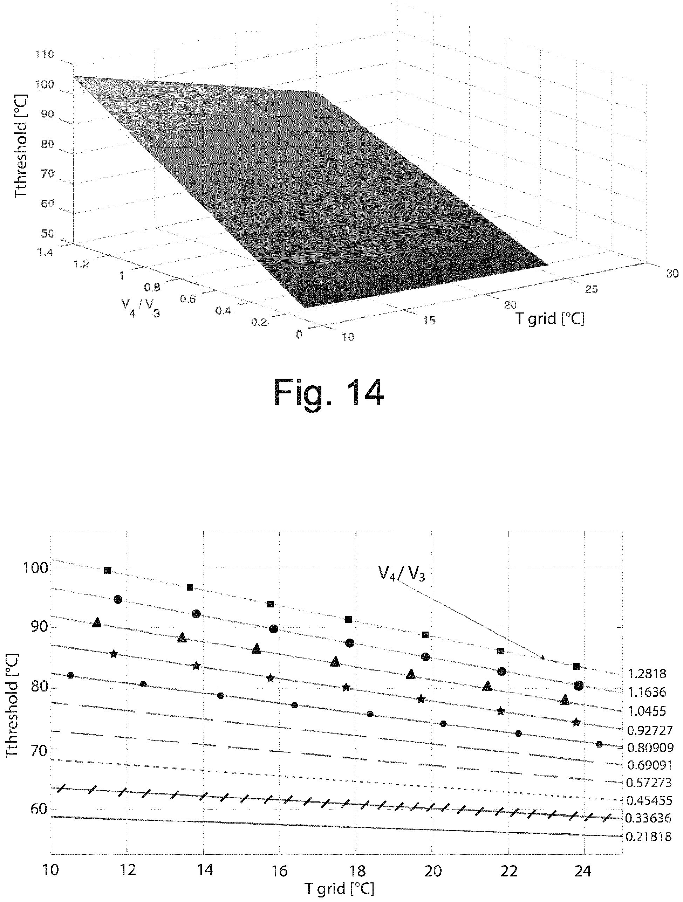

Which leads to the following equation (whose relationship between values is shown in the graph of Figure 14):

$$T_s = T_{user} + \frac{V_4}{V_3} * (T_{user} - T_{grid})$$

Where $T_s$ is the threshold temperature of the fluid contained in said main tank 3, following which the system switches to the configuration of transfer of energy to the additional tank 4.

$T_{user}$ means the set outlet temperature of the fluid on the user side through said outlet portion 80, set by the user or installer.

Conceptually, the above set out equation has the following meaning: if I bring the volumes $V_3$ and $V_4$ into equilibrium, with the fluid in the volume $V_4$ of the additional tank 4 at the grid temperature $T_{grid}$, the final equilibrium temperature T" must always be higher than the user temperature $T_{user}$, so that the system can deliver hot water at the temperature chosen by the user.

So, for example, considering $T_{grid}$ = 15°C, $T_{user}$ = 50°C with a ratio $\frac{V_4}{V_3} = 0.625$ we obtain from the equation

$$T_s = T_{utenza} + \frac{V_4}{V_3} * (T_{utenza} - T_{rete}) = 72°C$$

Of course, the $T_s$, with $T_{grid}$ (15°C) and $T_{user}$ (50°C) both fixed, can depend on varying the $V_4/V_3$ ratio chosen by the manufacturer (as also shown in the graph of Figure 15):

$$T_s = 50°C + (35°C * \frac{V_4}{V_3})$$

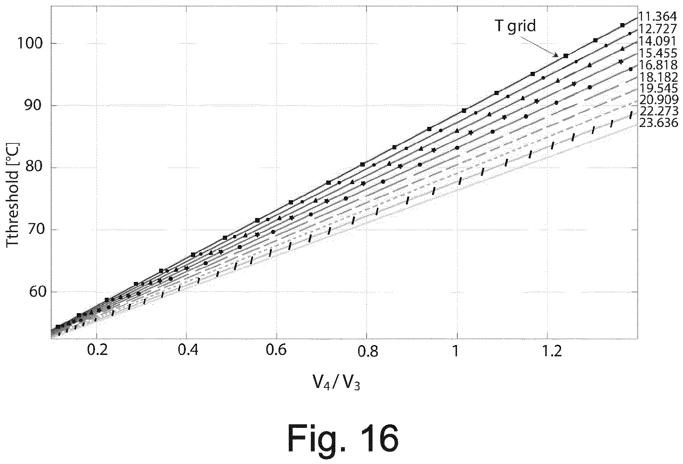

Or $T_s$, with $T_{user}$ (50°C) and $V_4/V_3$ ratio (0.625) both fixed, can depend on the variation of the grid temperature $T_{grid}$ (as shown in the graph of Figure 16):

$$T_s = 50°C + (0.625 * (50°C - T_{rete}))$$

With which the $T_s$ can be varied, as the grid temperature $T_{grid}$ has variable temperatures based on the season or the different location/climate zone.

Thanks to that logic it is therefore possible to take advantage of the possibility of varying the V/S ratio on the basis of the weather conditions or the climate zone, in such a way as to guarantee a fluid withdrawal in the design conditions (i.e. 40°-50°C) and maximise the solar energy collected by reducing overtemperature conditions that require the dissipation of excess energy.

Referring to Figure 6, a third embodiment of the solar system 1 according to the invention can be observed. The same components of the solar system 1 according to the first embodiment will be indicated with the same numerical references.

The third embodiment differs from the first embodiment due to the different arrangement of the flow management means 5, for example said first circulation pump 5. This first circulation pump 5 is in fact arranged in correspondence with said connecting conduit 71, upstream from the direction of flow of the first heat transfer fluid and from the main portion of inlet 73 to the plurality of main storage ducts 31. This solution would be advantageous for making the first circulation pump 5 work at a lower temperature, extending its useful life as the stress to which the component is subjected is reduced. In this case, however, the pressure losses are aggravated at the time of the DHW withdrawal on the user side, therefore it is necessary to have a hydraulic pressure in the aqueduct sufficient to guarantee the DHW flow rate desired by the user.

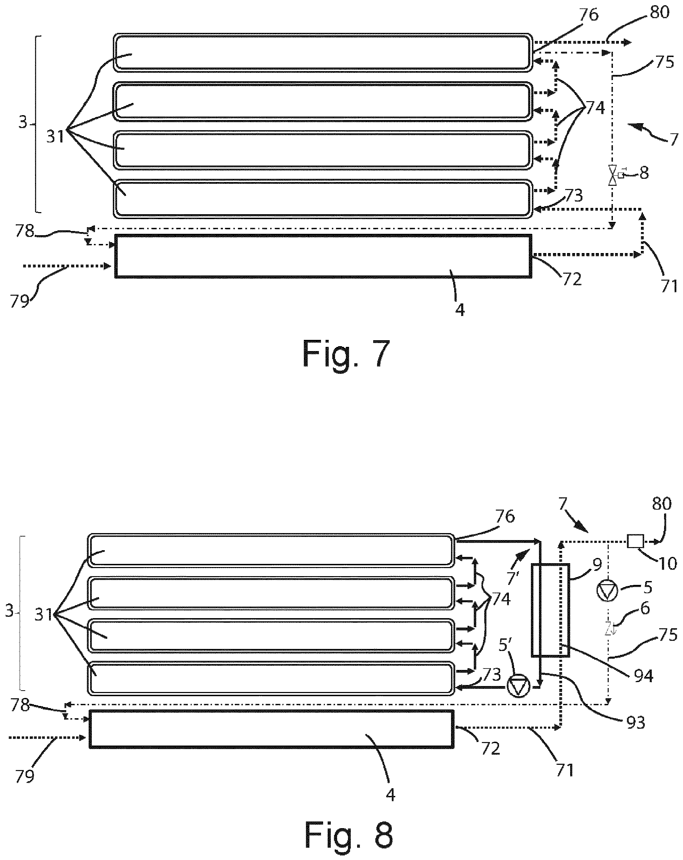

In relation to Figure 7, a fourth embodiment of the solar system 1 according to the invention can be observed. The same components of the solar system 1 according to the first embodiment will be indicated with the same numerical references.

This embodiment differs from the previous embodiments since the activation system of the additional tank 4 is not in forced circulation, but takes place through natural circulation. In fact, the first hydraulic circuit 7 provides a thermostatic valve 8 which is arranged in said first return conduit 75.

In the first use configuration, the thermostatic valve 8 prevents the passage of the first heat transfer fluid from said main outlet portion 76 of said main tank 3 to the additional inlet portion 78 of said additional tank 4.

When said threshold temperature $T_s$ is detected, the thermostatic valve 8 allows the passage of the first heat transfer fluid through said first return conduit 75 and the first hydraulic circuit 7 switches into said second use configuration, putting in fluid connection the main outlet portion 76 of the main tank 3 with the additional inlet portion 78 of the additional tank 4. In this configuration a closed circuit is created wherein the first heat transfer fluid circulates in the first hydraulic circuit 7 by natural circulation.

This solution is advantageous from an economic and installation point of view, since the system does not require electrical power. However, the energy transfer efficiency is lower than the forced convection circuit.

Referring to Figure 8, a fifth embodiment of the solar system 1 according to the invention can be observed.

As in the previous embodiments, this solar system 1 provides collecting means 2, in particular a plurality of vacuum collecting pipes 2, inside each of which a respective duct of said plurality of main storage ducts 31 is arranged for the storage of a second heat transfer fluid or a primary heat transfer fluid, for example a 30% water and glycol solution. Said plurality of main storage ducts 31 are in fluid communication with each other, in particular via said plurality of further connecting conduits 74 to form the main tank 3.

The plurality of connecting conduits 74 preferably connect said main storage ducts 31 in series. Furthermore, said main storage ducts 31 are connected with each other via a recirculation conduit 93 in such a way as to form a second hydraulic circuit 7'. This second hydraulic circuit 7' is a closed circuit inside which the second heat transfer fluid flows in correspondence with the collection area of the solar system 1.

A second circulation pump 5' is arranged in said recirculation conduit 93 for activating the circulation of said second heat transfer fluid.

Again, the solar system 1 provides an additional tank 4 for the storage of the first heat transfer fluid or secondary fluid, in particular domestic water, arranged alongside said plurality of vacuum collecting pipes 2. As per the described embodiments, the additional tank 4 is shielded from solar radiation and insulated. Furthermore, the additional tank 4 provides an additional inlet portion 78, in fluid connection with said inlet portion 79, and an additional outlet portion 72 of the secondary fluid. The outlet portion 80 of the heated secondary fluid is in fluid communication with the additional outlet portion 72 of the additional tank 4. Said first return conduit 75 is also provided between said additional inlet portion 78 and additional outlet 72 from said additional tank 4, to form said first hydraulic circuit 7 wherein the secondary fluid flows.

In correspondence with said first return conduit 75, a non-return valve 6 and said first circulation pump 5 are provided.

This embodiment differs in the mode of transfer of thermal energy from the main tank 3 to the additional tank 4, which takes place by means of a heat exchanger 9.

The heat exchange takes place between a portion of the further recirculation duct 93 of the second hydraulic circuit 7', where the primary fluid flows, and between a portion 94 of the connecting conduit 71, which corresponds to the second heat exchange portion of the first hydraulic circuit 7.

Furthermore, this embodiment can provide an activation flow switch 10, arranged alongside the first hydraulic circuit 7, which activates the second circulation pump 5' in order to guarantee the forced circulation of the second heat transfer fluid inside the heat exchanger 9, during the DHW withdrawal by the user (the forced circulation of the secondary fluid is guaranteed by the grid pressure). The flow switch 10 is in fact activated by the circulation of the first heat transfer fluid, which is guaranteed by the grid pressure. The flow switch 10 acts in DHW withdrawal conditions, as it guarantees the circulation of the two fluids in the heat exchanger 9 when the user opens the taps and therefore sends the secondary fluid into circulation, moved by the grid pressure.

Since the second heat transfer fluid flows inside said plurality of main storage ducts 31, the described embodiment makes it possible to reduce, even eliminate, the problems of corrosion and limescale in the plurality of main storage ducts 31 and in the plurality of further connecting conduits 74. Furthermore, this embodiment allows the use of less noble materials for producing said plurality of main storage ducts 31. The aforementioned problems are confined to the inside the heat exchanger 9 and to the additional tank 4, which are typically at lower temperatures and are also more easily replaceable.

During a first use configuration, the first heat transfer fluid is heated following the passage through the heat exchanger 9 where the energy is transferred via heat exchange between the recirculation conduit 93 and the second heat exchange portion 94, included in the connecting conduit 71, of said second 7' and first 7 hydraulic circuits, respectively. In the first use configuration, the first circulation pump 5 is deactivated.

When a threshold temperature $T_s$ of the fluid in the main tank 3 is reached, the control unit activates the second circulation pump 5' and the first circulation pump 5 (the latter activates the circulation of the first heat transfer fluid through the first return conduit 75), thus activating the recirculation of the first heat transfer fluid in the additional tank 4 after the heat exchange in said heat exchanger 9 with the second heat transfer fluid circulating in the second hydraulic circuit 7'. Therefore, the first hydraulic circuit 7 switches into a second use configuration.

This advantageously allows the excess energy of the second heat transfer fluid contained in the plurality of main storage ducts 31 to be stored in the additional tank 4.

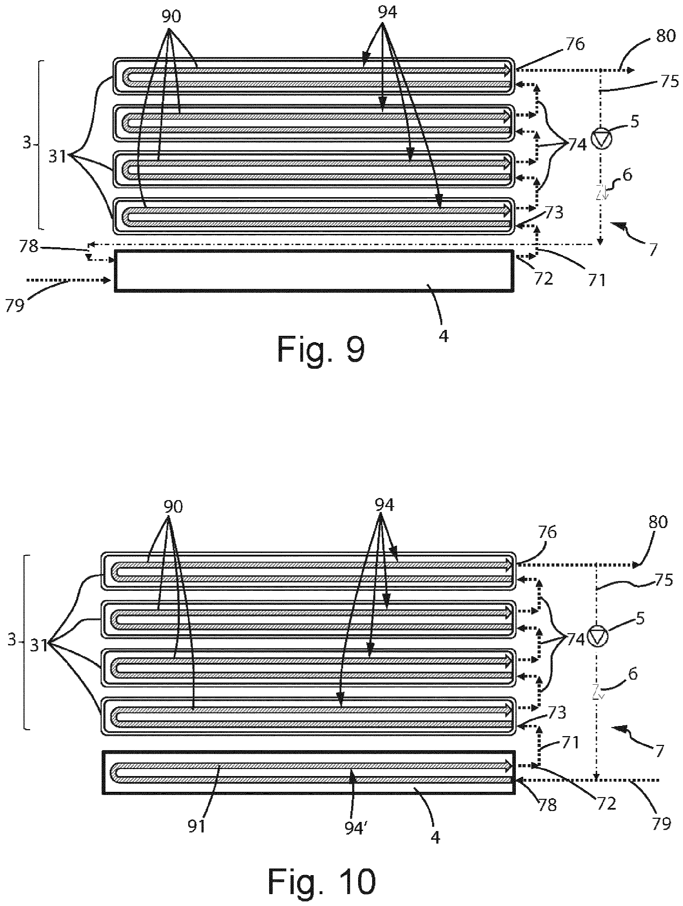

Referring to Figure 9, a sixth embodiment of the solar system 1 according to the invention, which is an alternative to the previous ones, can be observed. The same components will be indicated with the same numerical references.

This embodiment, similarly to the fifth embodiment, involves the use of two fluids. A second heat transfer fluid is contained in a plurality of main storage ducts 31, each arranged in the respective collecting pipe of said plurality of vacuum pipes 2, and which are not in fluid connection with each other, but which form a main tank 3 of the second heat transfer fluid.

A first heat transfer fluid is instead contained in an additional tank 4 arranged similarly to the previous embodiment but forming part of a first hydraulic circuit 7 similar to that one described for the first embodiment.

In this case, a plurality of heat exchange conduits 90 are provided, which form said second heat exchange portion 94 of the first hydraulic circuit 7, in fluid connection with each other. Said heat exchange conduits 90 are arranged inside the main storage ducts 31 to allow the heat exchange with the second heat transfer fluid contained therein. Each heat exchange conduit 90 of said second heat exchange portion 94 is preferably a corrugated pipe.

In this embodiment two use configurations are provided. In a first configuration the additional tank 4 is deactivated, as long as it is not necessary to transfer the solar energy stored in the main tank 3. In this configuration the first heat transfer fluid flows into the first hydraulic circuit 7 from the input portion 79 to the outlet portion 80 without passing through said first return conduit 75 and wherein said additional tank 4 acts solely as an inlet passage duct for the first heat transfer fluid coming from the hydraulic grid. Furthermore, in this embodiment, said connecting conduit 71 is provided, wherein the first heat transfer fluid flows between the additional outlet portion 72 of the additional tank 4 and the main inlet portion 73 of the main tank 3, in fluid connection with the plurality of heat exchange conduits 90 in correspondence with said second heat exchange portion 94, adapted to absorb the thermal energy from the second heat transfer fluid, contained inside the plurality of main storage ducts 31. In a second use configuration, however, when the extreme conditions of use are reached, i.e. when a threshold temperature $T_s$ of the second heat transfer fluid is reached, the fluid connection between the main tank 3 and the additional tank 4 is also activated via the first return connecting conduit 75 of said first hydraulic circuit 7, via the activation of flow management means, for example said first circulation pump 5, which were deactivated in said first use configuration. By activating the first circulation pump 5, the first heat transfer fluid coming out of the plurality of heat exchange conduits 90, flows between said additional inlet portion 78 of said additional tank 4 and said main outlet portion 76 of said heat exchanger 9 from said main tank 3, passing through said first return conduit 75. This therefore allows the transfer of energy between the volumes of said main 3 and additional 4 tanks. In other words, the first hydraulic circuit 7 becomes a closed circuit wherein the first heat transfer fluid passing through the first return conduit 75, which acts as a recirculation conduit, allows the circulation of the first heat transfer fluid between the additional tank 4 and the plurality of heat exchange conduits 90 inserted in the main tank 3, thus also cooling the second heat transfer fluid contained in the main tank 3, de facto allowing the system to operate at a lower average temperature, if temperature conditions are reached such that said solar system 1 risks overheating.

This embodiment, compared to the fifth one, allows the plurality of heat exchange conduits 90 to be integrated, in fluid connection with each other, inside said plurality of main storage ducts 31 of said main tank 3 wherein the second heat transfer fluid, thus the solar system 1 is more compact.

Furthermore, the presence of the second primary circulation pump 5' and the flow switch 10 described previously is not necessary. On the other hand, the length of the plurality of heat exchange conduits 90 is limited by the volume of the main storage ducts 31, therefore the exchange area between the second heat transfer fluid and the first heat transfer fluid is more constrained. Furthermore, the second heat transfer fluid carries out the heat exchange in natural convection; therefore, the heat exchange efficiency is also lower than in the case wherein a circulator, dedicated to the second heat transfer fluid, is adopted.

Referring to Figure 10, a seventh embodiment of the solar system 1 according to the invention can be observed, wherein inside the plurality of main storage conduits 31 and inside the additional tank 4, a second heat transfer fluid is present, in particular a primary fluid as previously described. The same components of the solar system 1 according to the first and fifth embodiments will be indicated with the same numerical references.

A second heat transfer fluid is contained in a plurality of main storage ducts 31, each arranged in the respective collecting pipe 2 and not in fluid connection with each other, but forming a main tank 3 of the second heat transfer fluid.

Furthermore, a second heat transfer fluid is also contained in an additional tank 4, not in fluid connection with said plurality of main storage ducts 31.

In this case, a first heat exchange portion 94' of the first hydraulic circuit 7 is provided, inside said additional tank 4, comprising a second heat exchange conduit 91 placed inside said additional tank 4 wherein a first heat transfer fluid, introduced via an additional inlet portion 78, flows in fluid connection with the inlet portion 79 of the first heat transfer fluid from the hydraulic grid and with a first return conduit 75, or recirculation branch 75. This second heat exchange conduit 91 is in fluid communication with said connecting conduit 71 in correspondence with said additional outlet portion 72.

Furthermore, a second heat exchange portion 94 of the first hydraulic circuit 7 is provided, coinciding with the main tank 3, with a plurality of heat exchange conduits 90, arranged inside said plurality of main storage conduits 31 wherein the first heat transfer fluid flows, introduced through a main inlet portion 73, in fluid connection with said connecting conduit 71 from the first heat exchange portion 94', and a main outlet conduit 76 in fluid connection with the outlet portion 80 and with the first return conduit 75. Said plurality of heat exchange conduits 90 is preferably composed of a plurality of corrugated pipes, connected in series or in parallel via the plurality of further connecting conduits 74.

Furthermore, in the present embodiment the first return conduit 75 is adapted to allow the recirculation of the first heat transfer fluid between the main outlet portion 76 and the additional inlet portion 78.

A first circulation pump 5 and a non-return valve 6 are provided in correspondence with the first return conduit 75.

In a first use configuration, the additional tank 4 is deactivated, as long as it is not necessary to transfer the solar energy stored in the main tank 3. In this configuration the first heat transfer fluid first flows into the first hydraulic circuit 7 in correspondence with the first heat exchange portion 94' and then into the plurality of heat exchange conduits 90, from the inlet portion 79 to the outlet portion 80 without passing through said first return conduit 75. If the second heat transfer fluid contained in the additional tank 4 has a temperature higher than the grid temperature $T_{grid}$, the first heat exchange area 94' acts as a pre-heating area for the first heat transfer fluid introduced into system 1.

In a second use configuration, instead, when the extreme conditions of use are reached, i.e. when a threshold temperature $T_s$ of the second heat transfer fluid contained in the main tank 3 is reached, the first return conduit 75 is activated by the first circulation pump 5, therefore the first heat transfer fluid is set in motion in the closed circuit operating between the portions 76, 78, 72 and 73 of the first hydraulic circuit 7. In this way the excess energy in the plurality of said main storage ducts 31 is transferred to the additional tank 4 by means of the plurality of heat exchange conduits 90 and the second heat exchange conduit 91.

Compared to the solution described in the previous schematics, the solution of Figure 10 allows the use of a second low pressure heat transfer fluid in the additional tank 4, therefore the additional tank 4 can be made of a generic shape and therefore be more easily integrated into the compact system. On the other hand, the use of a plurality of heat exchange conduits 90 and of the second heat exchange conduit 91 introduces heat exchange efficiency factors, therefore the second heat transfer fluid must always be at a temperature a few degrees centigrade higher than the first heat transfer fluid in each heat exchange area. This implies that at the end of the withdrawal on the user side it is necessary to leave the second heat transfer fluid at a temperature higher than that one resulting in the systems wherein the first heat transfer fluid is present inside the tanks.

Advantageously, the invention makes it possible to use the excess incident solar energy stored in the system, at the same time preventing it from reaching an extreme use temperature value, and to operate at a lower average temperature, increasing efficiency and decreasing dissipation towards the external environment.

Again, the invention advantageously makes it possible to obtain a V/S volume-to-collection surface ratio that is dynamic over time, variable on the basis of the weather and/or use conditions, for example that can be increased in overtemperature conditions and decreased in conditions of low solar irradiation.

Moreover, the invention presents a control strategy, based on the calculation of a $T_s$ beyond which a dedicated circuit activates/deactivates the energy transfer between the main tank and the additional tank, allowing an efficient use of the system even in conditions of an excessive solar radiation, storing the excess temperature of the fluid, or in conditions of poor solar radiation, preventing the heat exchange between the main tank and the additional one and allowing the solar system to heat the fluid sufficiently to the design conditions.

Furthermore, according to the invention in some of its embodiments it provides the use of a primary fluid inside said storage ducts and/or inside the additional storage tank, allowing the use of less noble materials for manufacturing the ducts.

Again, thanks to the division of the additional storage volume into a plurality of additional ducts, and to the possibility of carrying out the heating process of the heat transfer fluid contained in the additional storages in a sequential manner, this advantageously makes it possible to use all the solar energy for heating the heat transfer fluid contained in the main storage, in direct thermal contact with the absorber element or collecting means, and then in a sequential manner for heating the heat transfer fluid contained in the other additional storages. This makes it possible to "stratify" the thermal energy and make hot water available at the design temperature first.

In the foregoing the preferred embodiments have been described and variants of the present invention have been suggested, but it should be understood that those skilled in the art will be able to make modifications and changes without thereby departing from its scope of protection, as defined by the attached claims.

**Claims**

**1.** A compact solar system (1) for heating a first heat transfer fluid, said solar system (1) comprising an external frame (200), inside which are contained

> a main tank (3) for containing a heat transfer fluid,
> collecting means (2) for collecting the solar radiation, said collecting means (2) being in heat exchange with said main tank (3) for transferring the collected thermal energy to the heat transfer fluid contained in said main tank (3), and

a first hydraulic circuit (7) for the circulation of said first heat transfer fluid, comprising an inlet portion (79) for the inlet of the first heat transfer fluid and an outlet portion (80) for the outlet of the first heat transfer fluid, said solar system (1) further comprising inside said frame (200)

an additional tank (4) for containing a heat transfer fluid, said additional tank (4) being thermally isolated from said collecting means (2),

the volumetric ratio between the volume ($V_4$) of the additional tank (4) and the volume ($V_3$) of the main tank (3) being defined by the following relationship:

$$0.3 \leq \frac{V_4}{V_3} \leq 1.3$$

wherein said first hydraulic circuit (7) provides a first heat exchange portion (4, 94') in heat exchange with the heat transfer fluid contained in said additional tank (4) and a second heat exchange portion (3, 94) in heat exchange with the heat transfer fluid contained in said main tank (3),

said first (4, 94') and second (3, 94) heat exchange portions being in fluid connection with each other through a connecting conduit (71) **characterised in that** said first (4, 94') and second (3, 94) heat exchange portions are further in fluid connection with each other through a first return conduit (75),

and **in that** it provides flow adjusting means (5, 6; 5, 6; 8; 6") arranged in said first hydraulic circuit (7) for allowing the circulation of said first heat transfer fluid from the second heat exchange portion (3, 94) to the first heat exchange portion (4, 94') through said first return conduit (75), when a threshold temperature ($T_s$) of a heat transfer fluid contained in said main tank (3) is reached.

2. The solar system (1) according to the preceding claim, wherein the first heat exchange portion (4, 94') of said first hydraulic circuit (7) is the additional tank (4), said additional tank (4) being adapted to contain said first heat transfer fluid and being in fluid connection with said connecting conduit (71) and said first return conduit (75) of said first hydraulic circuit (7) and with said inlet portion (79).

3. The solar system (1) according to the preceding claim, wherein the second heat exchange portion (3; 94) of said first hydraulic circuit (7) is the main tank (3), said main tank (3) being adapted to contain said first heat transfer fluid and being in fluid connection with said connecting conduit (71) and said first return conduit (75) of said first hydraulic circuit (7) and with said outlet portion (80).

4. The solar system (1) according to claim 1 or 2, wherein said main tank (3) contains a second heat transfer fluid not in fluid connection with the first heat transfer fluid.

5. The solar system (1) according to claims 2 and 4, wherein it comprises a second hydraulic circuit (7') for the circulation of said second heat transfer fluid, said second hydraulic circuit (7') being a closed circuit composed of said main tank (3) and a recirculation conduit (93), said solar system (1) further comprising an heat exchanger (9) wherein the recirculation conduit (93) of the second hydraulic circuit (7') and the second heat exchange portion (94) of said first hydraulic circuit (7) are arranged in heat exchange with each other.

6. The solar system (1) according to the preceding claim, wherein it comprises a second circulation pump (5') arranged in said second hydraulic circuit (7') for activating the circulation of said second heat transfer fluid in said second hydraulic circuit (7') and detecting means (10), in particular a flow switch (10), for detecting in said first hydraulic circuit (7) the circulation of the first heat transfer fluid, said detecting means (10) being in connection with said second circulation pump (5'), said solar system (1) being configured to activate/deactivate said second circulation pump (5') based on the values detected by said detecting means (10).

7. The solar system (1) according to claim 4, wherein said second heat exchange portion (94) of said first hydraulic circuit (7) is arranged inside said main tank (3).

8. The solar system (1) according to any one of claims 1, 4 or 7, wherein said additional tank (4) contains a second heat transfer fluid, not in fluid connection with the first heat transfer fluid, wherein said first heat exchange portion (94') of said first hydraulic circuit (7) is arranged inside said additional tank (4).

9. The solar system (1) according to any one of the preceding claims, wherein said flow adjusting means arranged in said first hydraulic circuit (7) are a first circulation pump (5) and a non-return valve (6), wherein said non-return valve (6) is arranged on said first return conduit (75) between said two heat exchange portions (3, 4; 94, 94'; 4, 94).

10. The solar system (1) according to the preceding claim, wherein the first circulation pump (5) is arranged on one of said two connecting conduit (71) or return conduit (75) between said two heat exchange portions (3, 4; 94, 94'; 4, 94).

11. The solar system (1) according to any one of the claims 1 - 8, wherein said flow adjusting means arranged in said first hydraulic circuit (7) are a thermostatic valve (8) or an electrovalve (6") arranged in said first return conduit (75) between said two heat exchange portions (3, 4; 94, 94'; 4, 94).

12. The solar system (1) according to any one of the preceding claims, wherein said main tank (3) comprises a plurality of main storage ducts (31) in fluid connection with each other.

13. The solar system (1) according to the preceding claim when dependent from claim 7, wherein said second heat exchange portion (94) comprises a plurality of heat exchange conduits (90), in fluid connection witch each other, each one being inserted in a respective main storage duct (31) of the main tank (3).

14. The solar system (1) according to any one of the preceding claims, wherein said collecting means are a plurality of pipes having an outer vacuum gap (2).

15. The solar system (1) according to claim 14 when dependent from claim 12 or 13, wherein said main storage duct (31) of said main tank (3) is inserted in a respective pipe having an outer vacuum gap (2).

16. The solar system (1) according to any one of the preceding claims, wherein said additional tank (4) comprises at least two additional storage conduits (4', 4") in fluid connection with each other.

17. the solar system (1) according to any one of the preceding claims, wherein the ratio between the sum of the volumes $(V_3, V_4)$ of the main (3) and additional (4) tanks and the surface (S) of said collecting means (2) is defined by the following relationship:

$$50\frac{lit}{m^2} \leq \frac{V_3+V_4}{S} \leq 130\frac{lit}{m^2} \, .$$

18. The solar system (1) according to any one of the preceding claims, wherein it comprises a control unit (100) connected to said flow adjusting means (5, 6; 5, 6; 6") arranged in said first hydraulic circuit (7), said control unit (100) being configured to act on said flow adjusting means (5, 6; 5, 6; 6") on the basis of the temperature $(T_3)$ of the heat transfer fluid contained in the main tank (3) when said threshold temperature $(T_s)$ is reached.

19. The solar system (1) according to the preceding claim, wherein said threshold temperature $(T_s)$ is defined by the following formula

$$T_s = T_{user} + \frac{V_4}{V_3} * \left(T_{user} - T_{grid}\right)$$

wherein $T_{user}$ is equal to the temperature of said first heat transfer fluid coming out from said outlet portion (80), and
wherein $T_{grid}$ is equal to the temperature of said first heat transfer fluid coming in from said inlet portion (79).

20. The solar system (1) according to any one of the preceding claims, wherein it comprises temperature detecting means (102) arranged in said main tank (3) for detecting the temperature $(T_3)$ of the heat transfer fluid contained in the main tank (3).

21. The solar system (1) according to any one of the claims 1 - 19, wherein said flow adjusting means (5, 6; 5, 6; 6") comprise a thermal switch (103) for detecting the temperature $(T_3)$ of the heat transfer fluid contained in the main tank (3), and a first circulation pump (5) electronically connected to said thermal switch (103), said first circulation pump (5) being arranged in said first hydraulic circuit (7) and said thermal switch (103) being arranged in said main tank (3) in direct or indirect contact with the heat transfer fluid contained in said main tank (3).

22. The solar system (1) according to claim 20 or 21, wherein said temperature detecting means (102) or said thermal switch (103) are inserted in a thermowell (101).

23. The solar system (1) according to any one of the preceding claims, wherein said solar system (1) is adapted to assume a first use configuration wherein said first heat exchange fluid is adapted to flow into said first hydraulic circuit (7) from said inlet portion (79) to said outlet portion (80) through said first (4, 94') and second (3, 94) heat exchange portions passing only through said connecting conduit (71), and a second use configuration wherein the first heat transfer fluid circulates in said first hydraulic circuit (7) between said first (4, 94') and second (3, 94) heat exchange areas passing through both of said connecting conduit (71) and said first return conduit (75), wherein, during use, said solar system (1) assumes said second use configuration when the temperature ($T_3$) of the heat transfer fluid contained in the main tank (3) exceeds said threshold temperature ($T_s$).


## Patentansprüche

1. Kompaktes Solarsystem (1) zur Erwärmung einer ersten Wärmeträgerflüssigkeit, wobei das Solarsystem (1) einen äußeren Rahmen (200) umfasst, in dem enthalten sind einen Haupttank (3) zur Aufnahme einer Wärmeträgerflüssigkeit, eine Sammeleinrichtung (2) zum Sammeln der Sonnenstrahlung, wobei die Sammeleinrichtung (2) mit dem Haupttank (3) in Wärmeaustausch steht, um die gesammelte Wärmeenergie an das in dem Haupttank (3) enthaltene Wärmeübertragungsfluid zu übertragen, und einen ersten hydraulischen Kreislauf (7) für die Zirkulation der ersten Wärmeübertragungsflüssigkeit, der einen Einlassabschnitt (79) für den Einlass der ersten Wärmeübertragungsflüssigkeit und einen Auslassabschnitt (80) für den Auslass der ersten Wärmeübertragungsflüssigkeit umfasst, wobei das Solarsystem (1) ferner umfasst im Inneren des Rahmens (200) einen zusätzlichen Behälter (4) zur Aufnahme einer Wärmeübertragungsflüssigkeit, wobei der zusätzliche Behälter (4) thermisch von den Sammelmitteln (2) isoliert ist, wobei das Volumenverhältnis zwischen dem Volumen ($V_4$) des Zusatztanks (4) und dem Volumen ($V_3$) des Haupttanks (3) durch die folgende Beziehung definiert ist:

$$0.3 \leq \frac{V_4}{V_3} \leq 1.3$$

wobei der erste Hydraulikkreislauf (7) einen ersten Wärmetauscherteil (4, 94') im Wärmeaustausch mit dem im Zusatztank (4) enthaltenen Wärmeträgerfluid und einen zweiten Wärmetauscherteil (3, 94) im Wärmeaustausch mit dem im Haupttank (3) enthaltenen Wärmeträgerfluid bereitstellt, der erste (4, 94') und der zweite (3, 94) Wärmetauschabschnitt durch eine Verbindungsleitung (71) in Fluidverbindung miteinander stehen, **dadurch gekennzeichnet, dass** der erste (4, 94') und der zweite (3, 94) Wärmetauschabschnitt ferner durch eine erste Rückführleitung (75) in Fluidverbindung miteinander stehen, und dass sie Durchflusseinstellmittel (5, 6; 5, 6; 8; 6") bereitstellt, die in dem ersten Hydraulikkreis (7) angeordnet sind, um die Zirkulation des ersten Wärmeübertragungsfluids von dem zweiten Wärmeaustauschabschnitt (3, 94) zu dem ersten Wärmeaustauschabschnitt (4, 94') durch die erste Rückführleitung (75) zu ermöglichen, wenn eine Schwellentemperatur ($T_s$) eines in dem Haupttank (3) enthaltenen Wärmeübertragungsfluids erreicht ist.

2. Solarsystem (1) nach dem vorhergehenden Anspruch, wobei der erste Wärmetauscherteil (4, 94') des ersten Hydraulikkreises (7) der Zusatztank (4) ist, wobei der Zusatztank (4) geeignet ist, das erste Wärmeträgerfluid zu enthalten und in Fluidverbindung mit der Verbindungsleitung (71) und der ersten Rücklaufleitung (75) des ersten Hydraulikkreises (7) und mit dem Einlassabschnitt (79) steht.

3. Solarsystem (1) nach dem vorhergehenden Anspruch, wobei der zweite Wärmetauscherteil (3; 94) des ersten Hydraulikkreises (7) der Haupttank (3) ist, wobei der Haupttank (3) geeignet ist, das erste Wärmeübertragungsfluid zu enthalten und in Fluidverbindung mit der Verbindungsleitung (71) und der ersten Rücklaufleitung (75) des ersten Hydraulikkreises (7) und mit dem Auslassabschnitt (80) steht.

4. Solarsystem (1) nach Anspruch 1 oder 2, wobei der Haupttank (3) ein zweites Wärmeträgerfluid enthält, das nicht in Fluidverbindung mit dem ersten Wärmeträgerfluid steht.

**5.** Solarsystem (1) nach Anspruch 2 und 4, wobei es einen zweiten Hydraulikkreislauf (7') für die Zirkulation des zweiten Wärmeträgerfluids umfasst, wobei der zweite Hydraulikkreislauf (7') ein geschlossener Kreislauf ist, der aus dem Haupttank (3) und einer Rezirkulationsleitung (93) besteht, wobei das Solarsystem (1) ferner einen Wärmetauscher (9) umfasst, wobei die Rezirkulationsleitung (93) des zweiten Hydraulikkreislaufs (7') und der zweite Wärmetauscherabschnitt (94) des ersten Hydraulikkreislaufs (7) im Wärmeaustausch miteinander angeordnet sind.

**6.** Solarsystem (1) nach dem vorhergehenden Anspruch, **dadurch gekennzeichnet, dass** es eine im zweiten Hydraulikkreis (7') angeordnete zweite Umwälzpumpe (5') zur Aktivierung der Zirkulation der zweiten Wärmeträgerflüssigkeit im zweiten Hydraulikkreis (7') und Erfassungsmittel (10), insbesondere einen Strömungsschalter (10), aufweist, zum Erfassen der Zirkulation des ersten Wärmeträgerfluids in dem ersten Hydraulikkreis (7), wobei die Erfassungsmittel (10) mit der zweiten Zirkulationspumpe (5') in Verbindung stehen, wobei das Solarsystem (1) so konfiguriert ist, dass es die zweite Zirkulationspumpe (5') auf der Grundlage der von den Erfassungsmitteln (10) erfassten Werte aktiviert/deaktiviert.

**7.** Solarsystem (1) nach Anspruch 4, wobei der zweite Wärmetauscherteil (94) des ersten Hydraulikkreises (7) innerhalb des Haupttanks (3) angeordnet ist.

**8.** Solarsystem (1) nach einem der Ansprüche 1, 4 oder 7, wobei der Zusatztank (4) ein zweites Wärmeübertragungsfluid enthält, das nicht in Fluidverbindung mit dem ersten Wärmeübertragungsfluid steht, wobei der erste Wärmeaustauschabschnitt (94') des ersten Hydraulikkreises (7) innerhalb des Zusatztanks (4) angeordnet ist.

**9.** Solarsystem (1) nach einem der vorhergehenden Ansprüche, wobei die in dem ersten hydraulischen Kreislauf (7) angeordneten Durchflusseinstellmittel eine erste Umwälzpumpe (5) und ein Rückschlagventil (6) sind, wobei das Rückschlagventil (6) an der ersten Rücklaufleitung (75) zwischen den beiden Wärmetauscherteilen (3, 4; 94, 94'; 4, 94) angeordnet ist.

**10.** Solarsystem (1) nach dem vorhergehenden Anspruch, wobei die erste Umwälzpumpe (5) an einer der beiden Verbindungsleitungen (71) oder Rücklaufleitungen (75) zwischen den beiden Wärmetauscherteilen (3, 4; 94, 94'; 4, 94) angeordnet ist.

**11.** Solarsystem (1) nach einem der Ansprüche 1 bis 8, wobei die in dem ersten Hydraulikkreislauf (7) angeordneten Durchflusseinstellmittel ein Thermostatventil (8) oder ein Elektroventil (6") sind, das in der ersten Rücklaufleitung (75) zwischen den beiden Wärmetauscherteilen (3, 4; 94, 94'; 4, 94) angeordnet ist.

**12.** Solarsystem (1) nach einem der vorhergehenden Ansprüche, wobei der Hauptspeicher (3) eine Vielzahl von Hauptspeicherkanälen (31) umfasst, die in Fluidverbindung miteinander stehen.

**13.** Solarsystem (1) nach dem vorhergehenden Anspruch in Abhängigkeit von Anspruch 7, wobei der zweite Wärmetauschabschnitt (94) eine Vielzahl von Wärmetauschleitungen (90) umfasst, die miteinander in Fluidverbindung stehen und jeweils in einen entsprechenden Hauptspeicherkanal (31) des Hauptspeichers (3) eingesetzt sind.

**14.** Solarsystem (1) nach einem der vorhergehenden Ansprüche, wobei die Sammelmittel eine Vielzahl von Rohren mit einem äußeren Vakuumspalt (2) sind.

**15.** Solarsystem (1) nach Anspruch 14 in Abhängigkeit von Anspruch 12 oder 13, wobei die Hauptspeicherleitung (31) des Hauptspeichers (3) in ein entsprechendes Rohr mit einem äußeren Vakuumspalt (2) eingesetzt ist.

**16.** Solarsystem (1) nach einem der vorhergehenden Ansprüche, wobei der Zusatztank (4) mindestens zwei zusätzliche Speicherleitungen (4', 4") umfasst, die in Fluidverbindung miteinander stehen.

**17.** Solarsystem (1) nach einem der vorhergehenden Ansprüche, wobei das Verhältnis zwischen der Summe der Volumina ($V_3$, $V_4$) des Hauptspeichers (3) und des Zusatzspeichers (4) und der Oberfläche (S) des Sammelmittels (2) durch die folgende Beziehung definiert ist:

$$50\frac{lit}{m^2} \leq \frac{V_3+V_4}{s} \leq 130\frac{lit}{m^2}.$$

**18.** Solarsystem (1) nach einem der vorhergehenden Ansprüche, wobei es eine Steuereinheit (100) umfasst, die mit den Durchflusseinstellmitteln (5, 6; 5, 6; 6") verbunden ist, die in dem ersten Hydraulikkreis (7) angeordnet sind, wobei die Steuereinheit (100) so konfiguriert ist, dass sie auf die Durchflusseinstellmittel (5, 6; 5, 6; 6") auf der Grundlage der Temperatur ($T_3$) der in dem Haupttank (3) enthaltenen Wärmeübertragungsflüssigkeit einwirkt, wenn die Schwellentemperatur ($T_s$) erreicht ist.

19. Solarsystem (1) nach dem vorhergehenden Anspruch, wobei die Schwellentemperatur ($T_s$) durch die folgende Formel definiert ist

$$T_s \;=\; T_{user} \;+\; \frac{V_4}{V_3} \;*\; (T_{user} - T_{grid})$$

wobei $T_{user}$ gleich der Temperatur des ersten Wärmeübertragungsfluids ist, das aus dem Auslassabschnitt (80) austritt, und wobei $T_{grid}$ gleich der Temperatur der ersten Wärmeübertragungsflüssigkeit ist, die von dem Einlassabschnitt (79) eintritt.

20. Solarsystem (1) nach einem der vorhergehenden Ansprüche, **dadurch gekennzeichnet, dass** es Temperaturerfassungsmittel (102) umfasst, die in dem Haupttank (3) angeordnet sind, um die Temperatur ($T_3$) der im Haupttank (3) enthaltenen Wärmeträgerflüssigkeit zu erfassen.

21. Solarsystem (1) nach einem der Ansprüche 1 bis 19, wobei die Mittel zur Durchflussregelung (5, 6; 5, 6; 6") einen Wärmeschalter (103) zum Erfassen der Temperatur ($T_3$) der im Haupttank (3) enthaltenen Wärmeträgerflüssigkeit und eine mit dem Wärmeschalter (103) elektronisch verbundene erste Umwälzpumpe (5) umfassen, wobei die erste Umwälzpumpe (5) im ersten Hydraulikkreis (7) und der Wärmeschalter (103) im Haupttank (3) in direktem oder indirektem Kontakt mit der im Haupttank (3) enthaltenen Wärmeträgerflüssigkeit angeordnet ist.

22. Solarsystem (1) nach Anspruch 20 oder 21, wobei das Temperaturerfassungsmittel (102) oder der Thermoschalter (103) in ein Schutzrohr (101) eingesetzt sind.

23. Solarsystem (1) nach einem der vorangehenden Ansprüche, wobei das Solarsystem (1) eine erste Verwendungskonfiguration annehmen kann, in der das erste Wärmetauschfluid in den ersten Hydraulikkreislauf (7) von dem Einlassabschnitt (79) zu dem Auslassabschnitt (80) durch den ersten (4, 94') und den zweiten (3, 94) Wärmetauschbereich fließen kann, die nur durch die Verbindungsleitung (71) verlaufen, und eine zweite Verwendungskonfiguration, in der das erste Wärmeübertragungsfluid in dem ersten Hydraulikkreis (7) zwischen dem ersten (4, 94') und dem zweiten (3, 94) Wärmeaustauschbereich zirkuliert und sowohl die Verbindungsleitung (71) als auch die erste Rücklaufleitung (75) durchläuft, wobei das Solarsystem (1) während der Verwendung die zweite Verwendungskonfiguration annimmt, wenn die Temperatur ($T_3$) des im Haupttank (3) enthaltenen Wärmeübertragungsfluids die Schwellentemperatur ($T_s$) überschreitet.

**Revendications**

1. Installation solaire compacte (1) pour le chauffage d'un premier fluide caloporteur, ladite installation solaire (1) comprenant un cadre extérieur (200), à l'intérieur duquel se trouvent un réservoir principal (3) contenant un fluide caloporteur, des moyens de collecte (2) pour collecter le rayonnement solaire, lesdits moyens de collecte (2) étant en échange de chaleur avec ledit réservoir principal (3) pour transférer l'énergie thermique collectée au fluide caloporteur contenu dans ledit réservoir principal (3), et un premier circuit hydraulique (7) pour la circulation dudit premier fluide caloporteur, comprenant une partie d'entrée (79) pour l'entrée du premier fluide caloporteur et une partie de sortie (80) pour la sortie du premier fluide caloporteur, ladite installation solaire (1) comprenant en outre à l'intérieur dudit cadre (200) un réservoir supplémentaire (4) pour contenir un fluide de transfert de chaleur, ledit réservoir supplémentaire (4) étant thermiquement isolé des moyens de collecte (2), le rapport volumétrique entre le volume ($V_4$) du réservoir supplémentaire (4) et le volume ($V_3$) du réservoir principal (3) étant défini par la relation suivante:

$$0.3 \leq \frac{V_4}{V_3} \leq 1.3$$

dans laquelle ledit premier circuit hydraulique (7) fournit une première partie d'échange de chaleur (4, 94') en échange de chaleur avec le fluide de transfert de chaleur contenu dans ledit réservoir supplémentaire (4) et une deuxième partie d'échange de chaleur (3, 94) en échange de chaleur avec le fluide de transfert de chaleur contenu dans ledit réservoir principal (3), lesdites première (4, 94') et seconde (3, 94) portions d'échange de chaleur sont en liaison fluidique l'une avec l'autre par l'intermédiaire d'un conduit de raccordement (71) **caractérisé en ce que** lesdites première (4, 94') et seconde (3, 94) portions d'échange de chaleur sont en outre en liaison fluidique l'une avec l'autre par l'intermédiaire d'un premier conduit de retour (75), et **en ce qu'**il prévoit des moyens de réglage du débit (5, 6; 5, 6; 8; 6") disposés dans ledit premier circuit hydraulique (7) pour permettre la circulation dudit premier fluide caloporteur de la deuxième partie d'échange de chaleur (3, 94) à la première partie d'échange de chaleur (4, 94') à travers ledit premier conduit de retour (75), lorsqu'une température seuil ($T_s$) d'un fluide caloporteur contenu dans ledit réservoir principal (3) est atteinte.

2. Installation solaire (1) selon la revendication précédente, dans laquelle la première partie d'échange de chaleur (4, 94') dudit premier circuit hydraulique (7) est le réservoir supplémentaire (4), ledit réservoir supplémentaire (4) étant adapté pour contenir ledit premier fluide caloporteur et étant en connexion fluidique avec ledit conduit de raccordement (71) et ledit premier conduit de retour (75) dudit premier circuit hydraulique (7) et avec ladite partie d'entrée (79).

3. Installation solaire (1) selon la revendication précédente, dans laquelle la deuxième partie d'échange de chaleur (3; 94) dudit premier circuit hydraulique (7) est le réservoir principal (3), ledit réservoir principal (3) étant adapté pour contenir ledit premier fluide caloporteur et étant en liaison fluidique avec ledit conduit de raccordement (71) et ledit premier conduit de retour (75) dudit premier circuit hydraulique (7) et avec ladite partie de sortie (80).

4. Installation solaire (1) selon la revendication 1 ou 2, dans laquelle ledit réservoir principal (3) contient un second fluide de transfert de chaleur qui n'est pas en liaison avec le premier fluide de transfert de chaleur.

5. Installation solaire (1) selon les revendications 2 et 4, dans laquelle il comprend un second circuit hydraulique (7') pour la circulation dudit second fluide de transfert de chaleur, ledit second circuit hydraulique (7') étant un circuit fermé composé dudit réservoir principal (3) et d'un conduit de recirculation (93), ladite installation solaire (1) comprenant en outre un échangeur de chaleur (9) dans laquelle le conduit de recirculation (93) du second circuit hydraulique (7') et la seconde partie d'échange de chaleur (94) dudit premier circuit hydraulique (7) sont disposés en échange de chaleur l'un avec l'autre.

6. Installation solaire (1) selon la revendication précédente, dans laquelle il comprend une deuxième pompe de circulation (5') disposée dans ledit deuxième circuit hydraulique (7') pour activer la circulation dudit deuxième fluide caloporteur dans ledit deuxième circuit hydraulique (7') et des moyens de détection (10), notamment un commutateur de débit (10), pour détecter dans ledit premier circuit hydraulique (7) la circulation du premier fluide caloporteur, lesdits moyens de détection (10) étant en connexion avec ladite deuxième pompe de circulation (5'), ladite installation solaire (1) étant configuré pour activer/désactiver ladite deuxième pompe de circulation (5') en fonction des valeurs détectées par lesdits moyens de détection (10).

7. Installation solaire (1) selon la revendication 4, dans laquelle la deuxième partie d'échange de chaleur (94) du premier circuit hydraulique (7) est disposée à l'intérieur du réservoir principal (3).

8. Installation solaire (1) selon l'une quelconque des revendications 1, 4 ou 7, dans laquelle ledit réservoir supplémentaire (4) contient un second fluide caloporteur, non en liaison fluidique avec le premier fluide caloporteur, dans laquelle ladite première partie d'échange thermique (94') dudit premier circuit hydraulique (7) est disposée à l'intérieur dudit réservoir supplémentaire (4).

9. Installation solaire (1) selon l'une quelconque des revendications précédentes, dans laquelle lesdits moyens de réglage du débit disposés dans ledit premier circuit hydraulique (7) sont une première pompe de circulation (5) et un clapet anti-retour (6), dans laquelle ledit clapet anti-retour (6) est disposé sur ledit premier conduit de retour (75) entre lesdites deux parties d'échange de chaleur (3, 4; 94, 94'; 4, 94).

10. Installation solaire (1) selon la revendication précédente, dans laquelle la première pompe de circulation (5) est disposée sur l'un des deux conduits de raccordement (71) ou de retour (75) entre les deux parties d'échange de chaleur (3, 4; 94, 94'; 4, 94).

11. Installation solaire (1) selon l'une des revendications 1 à 8, dans laquelle les moyens de réglage du débit disposés dans le premier circuit hydraulique (7) sont une vanne thermostatique (8) ou une électrovanne (6") disposée dans le premier conduit de retour (75) entre les deux parties d'échange de chaleur (3, 4; 94, 94'; 4, 94).

**12.** Installation solaire (1) selon l'une quelconque des revendications précédentes, dans laquelle ledit réservoir principal (3) comprend une pluralité de conduits de stockage principaux (31) en liaison fluidique les uns avec les autres.

**13.** Installation solaire (1) selon la revendication précédente lorsqu'elle dépend de la revendication 7, dans laquelle ladite deuxième partie d'échange de chaleur (94) comprend une pluralité de conduits d'échange de chaleur (90), en liaison fluidique les uns avec les autres, chacun étant inséré dans un conduit de stockage principal respectif (31) du réservoir principal (3).

**14.** Installation solaire (1) selon l'une quelconque des revendications précédentes, dans laquelle les moyens de collecte sont une pluralité de tuyaux ayant un vide extérieur (2).

**15.** Installation solaire (1) selon la revendication 14 lorsqu'il dépend de la revendication 12 ou 13, dans laquelle ledit conduit de stockage principal (31) dudit réservoir principal (3) est inséré dans un tuyau respectif ayant un vide extérieur (2).

**16.** Installation solaire (1) selon l'une quelconque des revendications précédentes, dans laquelle ledit réservoir supplémentaire (4) comprend au moins deux conduits de stockage supplémentaires (4', 4") en liaison fluidique l'un avec l'autre.

**17.** Installation solaire (1) selon l'une quelconque des revendications précédentes, dans laquelle le rapport entre la somme des volumes ($V_3$, $V_4$) des réservoirs principal (3) et supplémentaire (4) et la surface (S) dudit moyen collecteur (2) est défini par la relation suivante:

$$50\frac{lit}{m^2} \ \le \ \frac{V_3+V_4}{s} \ \le 130\frac{lit}{m^2}.$$

**18.** Installation solaire (1) selon l'une quelconque des revendications précédentes, dans laquelle il comprend une unité de commande (100) connectée auxdits moyens de réglage du débit (5, 6; 5, 6; 6") disposés dans ledit premier circuit hydraulique (7), ladite unité de commande (100) étant configurée pour agir sur lesdits moyens de réglage du débit (5, 6; 5, 6; 6") en fonction de la température ($T_3$) du fluide caloporteur contenu dans le réservoir principal (3) lorsque ladite température seuil ($T_s$) est atteinte.

**19.** Installation solaire (1) selon la revendication précédente, dans laquelle ladite température seuil ($T_s$) est définie par la formule suivante

$$T_s \ = \ T_{user} \ + \ \frac{V_4}{V_3} \ * \ (T_{user} \ - T_{grid})$$

dans laquelle $T_{user}$ est égal à la température dudit premier fluide caloporteur sortant de ladite partie de sortie (80), et dans laquelle $T_{grid}$ est égale à la température du premier fluide caloporteur provenant de la partie d'entrée (79).

**20.** Installation solaire (1) selon l'une quelconque des revendications précédentes, dans laquelle il comprend des moyens de détection de la température (102) disposés dans ledit réservoir principal (3) pour détecter la température ($T_3$) du fluide caloporteur contenu dans le réservoir principal (3).

**21.** Installation solaire (1) selon l'une des revendications 1 - 19, dans laquelle les moyens de réglage du débit (5, 6; 5, 6; 6") comprennent un interrupteur thermique (103) pour détecter la température ($T_3$) du fluide caloporteur contenu dans le réservoir principal (3), et une première pompe de circulation (5) connectée électroniquement audit interrupteur thermique (103), ladite première pompe de circulation (5) étant disposée dans ledit premier circuit hydraulique (7) et ledit interrupteur thermique (103) étant disposé dans ledit réservoir principal (3) en contact direct ou indirect avec le fluide caloporteur contenu dans ledit réservoir principal (3).

**22.** Installation solaire (1) selon la revendication 20 ou 21, dans laquelle lesdits moyens de détection de la température (102) ou ledit interrupteur thermique (103) sont insérés dans un puits thermométrique (101).

**23.** Installation solaire (1) selon l'une quelconque des revendications précédentes, dans laquelle ladite installation solaire (1) est adapté pour prendre une première configuration d'utilisation dans laquelle ledit premier fluide caloporteur est adapté pour circuler dans ledit premier circuit hydraulique (7) depuis ladite partie d'entrée (79) jusqu'à ladite partie de sortie (80) à travers lesdites première (4, 94') et seconde (3, 94) parties d'échange de chaleur passant uniquement à travers ledit conduit de connexion (71), et une deuxième configuration d'utilisation dans laquelle le premier fluide caloporteur circule dans ledit premier circuit hydraulique (7) entre lesdites première (4, 94') et deuxième (3, 94) zones d'échange de chaleur en passant par ledit conduit de connexion (71) et ledit premier conduit de retour (75), dans laquelle, pendant l'utilisation, ladite installation solaire (1) adopte ladite deuxième configuration d'utilisation lorsque la température ($T_3$) du fluide caloporteur contenu dans le réservoir principal (3) dépasse ladite température seuil ($T_s$).

Fig. 1a

Fig. 1b

## Fig. 1c

## Fig. 1d

Fig. 2

Fig. 3a

Fig. 3b

Fig. 4a

Fig. 4b

Fig. 5a

Fig. 5b

Fig. 6

Fig. 7

Fig. 8

Fig. 9

Fig. 10

Fig. 11a

Fig. 11b

Fig. 11c

Fig. 12

Fig. 13

## Fig. 14

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2746692 A1
- EP 2924364 B1
- WO 2019123508 A1
- WO 2018055648 A1